(19) **Europäisches Patentamt European Patent Office Office européen des brevets**

(11) **EP 3 728 157 B1**

(12) **EUROPEAN PATENT SPECIFICATION**

(45) Date of publication and mention of the grant of the patent:
**16.03.2022 Bulletin 2022/11**

(21) Application number: **18826576.3**

(22) Date of filing: **17.12.2018**

(51) International Patent Classification (IPC):
**C03C 17/36** $^{(2006.01)}$

(52) Cooperative Patent Classification (CPC):
**C03C 17/36; C03C 17/3639; C03C 17/3644; C03C 17/366; C03C 17/3681;** C03C 2218/154

(86) International application number:
**PCT/EP2018/085219**

(87) International publication number:
**WO 2019/121522 (27.06.2019 Gazette 2019/26)**

(54) **COATED SUBSTRATES**

BESCHICHTETE SUBSTRATE

SUBSTRATS REVÊTUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2017 EP 17210159**

(43) Date of publication of application:
**28.10.2020 Bulletin 2020/44**

(73) Proprietors:
- **AGC Glass Europe**
  **1348 Louvain-La-Neuve (BE)**
- **AGC Inc.**
  **Chiyoda-ku**
  **Tokyo 100-8405 (JP)**
- **AGC Flat Glass North America, Inc.**
  **Alpharetta, 30022-1167 (US)**
- **AGC Vidros do Brasil Ltda**
  **CEP 12523-671 Guaratinguetá São Paulo (BR)**

(72) Inventors:
- **MERCIER, Virginie**
  **1420 Braine-L'Alleud (BE)**
- **HUBERT, Julie**
  **1060 Bruxelles (BE)**
- **MAHIEU, Stijn**
  **9920 Lovendegem (BE)**

(74) Representative: **AGC Glass Europe Technovation Centre Intellectual Property Department Rue Louis Blériot 12 6041 Gosselies (BE)**

(56) References cited:
**US-A- 6 159 621          US-A1- 2009 047 509
US-A1- 2012 070 652    US-A1- 2012 070 672
US-A1- 2015 321 950    US-A1- 2016 122 238**

**Description**

The present invention relates to coated substrates, in particular transparent substrates, for example made of glass, which are coated with at least one infrared-reflecting layer.

In some circumstances, it is useful to provide for solar control glazings in buildings or vehicles that have some degree of infrared (IR) reflecting properties, such as to avoid too much infrared rays to heat the room or compartment behind the glazing. Sun irradiation reaching the earth is composed of visible light, ultraviolet radiation and infrared radiation. While visible light has definite advantages of illumination, the heat associated with the infrared radiation may bring along some drawbacks, especially in spaces where windows and glazing cover the most of the surrounding panes. It may then be useful to block at least a part of the infrared radiation to allow a better management of temperature within the room or vehicle. Such temperature management includes less heating in the summer or warmer periods, and/or less heat loss during the winter or colder months, and/or less heat loss during the night. In other circumstances, it is useful to provide for low-emissivity insulating glazings in building or vehicles that have some degree of infrared (IR) reflecting properties, such as to avoid heat loss during the winter or colder months, and/or less heat loss during the night.

Thin metallic IR reflecting layers (e.g., based on silver) are often used to reflect IR radiation. These silver-based layers' quality depends on the layers surrounding them and are susceptible to damage. They generally require protective layers on both sides to protect them. The quality of silver based IR reflecting layers may also benefit from being deposited directly on and in contact with a layer comprising an oxide of zinc combined with aluminum (ZnO:Al).

WO2003033427A1 discloses a coated article that can be used in applications such as insulating glazing (IG) units, so that resulting IG units can achieve high visible transmission of at least 70% with low solar heat gain coefficients and/or low shading coefficient and/or good chemical and/or mechanical durability and/or neutral transmissive color and/or neutral reflective color from the exterior of the IG unit. In certain example embodiments, coated articles comprise: substrate/$TiO_x$/$ZnO_x$/Ag/$NiCrO_x$/$SnO_x$/$ZnO_x$/Ag/$NiCrO_x$/$SnO_x$/$Si_xN_y$.

US8815420B2 discloses coated article provided with at least one functional layer, such as an infrared (IR) reflecting layer of or including silver and/or gold. A dielectric and substantially transparent seed layer is provided under and directly contacting the functional layer. In certain example embodiments, the seed layer includes an oxide of zinc and gallium for lowering the stress of the layer and thus improving mechanical and chemical durability of the overall coating.

WO2005000578A1 relates to a transparent substrate of the type that is made from glass. The substrate comprises a coating containing at least one layer 'C' based on [nitride, carbonitride, oxynitride or oxycarbonitride] of silicon or aluminium or a mixture of the two, with a covering layer disposed thereon. The invention is characterized in that the covering layer is an oxide-based mechanical protection layer, said oxide optionally having a sub- or superstoichiometric content of oxygen and/or optionally being nitride.

WO2004043871A1 relates to a system of layers for coating the surface of transparent substrates, in particular, a system of layers with low emissivity (Low-E) for glass windows, comprising at least one layer of mixed oxides produced by reactive cathodic sputtering from a metallic target alloy. The mixed oxide layer comprises ZnO, $TiO_2$ and at least one of the oxides $Al_2O_3$, $Ga_2O_3$ and $Sb_2O_3$ and finds application as upper and/or lower anti-reflection layer, partial layer of an anti-reflecting layer and particularly as a final finishing layer. Said system of layers with a mixed oxide topcoat is characterized by a high degree of hardness and excellent resistance to the maritime climate.

US20120070672A1 discloses a coated article provided with at least one functional layer, such as an infrared (IR) reflecting layer(s) of or including silver and/or gold wherein a dielectric and substantially transparent seed layer is provided under and directly contacting the functional layer including an oxide of zinc and boron for increasing the hardness of the layer and thus improving durability of the overall coating. The seed layer may further include aluminum and/or gallium, for enhancing the electrical properties and/or reducing the stress in the resulting coating.

US2009/0047509A1 discloses a coated glass pane with a low-e and/or solar control coating comprising at least one layer sequence which comprises at least the following transparent layers: a lower anti-reflection layer; an IR-reflecting layer; an upper anti-reflection layer; and at least one of the anti-reflection layers comprising at least one compound layer containing a mixture of an (oxy)nitride of Si and/or Al and of ZnO.

US2015/0321950A1 discloses a transparent pane, comprising: at least one transparent substrate; and at least one electrically conductive coating on at least one surface of the at least one transparent substrate, wherein each at least one electrically conductive coating has at least two functional layers arranged one above the other, wherein each functional layer includes a layer of an optically highly refractive material having a refractive index greater than or equal to 2.1; a smoothing layer containing at least one non-crystalline oxide and being arranged above the layer of an optically highly refractive material; a lower matching layer arranged above the smoothing layer; an electrically conductive layer arranged above the lower matching layer, and an upper matching layer arranged above the electrically conductive layer, wherein at least one of the lower matching layer and the upper matching layer contains a homogeneously distributed getter material selected from the group consisting of niobium, titanium, barium, magnesium, tantalum, zirconium, thorium, palladium, platinum, and alloys thereof, and wherein the electrically conductive layer is in direct contact with at least one of a lower matching layer containing the getter material or a upper matching layer containing the getter material. The electrically conductive coating is applied on the surface of a the substrate facing the laminating film, when mounted in a composite pane, to be protected from damage and corrosion.

US6159621 discloses a transparent substrate provided with a thin-film stack comprising at least one metallic film with reflective properties in the infrared region, and under which is disposed a first antireflection coating comprising one or more metal oxides, and an upper protective metallic film comprising an alloy of Ti, Zr or Hf with Al, Pt or Pd or an AlSi alloy, and a second upper antireflection coating comprising (A) at least two metal oxide films, one of which is ZnO based and contains 0.1 to 10% by weight of at least one of the elements B, Si, Ga, Sn, Al, Co, Mg, Mn, Fe, Ni and/or Cr, and the other comprises $SnO_2$ or $Bi_2O_3$, and (B) a final, hard oxide film.

Typical weaknesses of infrared reflecting layers include a poor quality of the IR layer itself, with an emissivity that is relatively high for a given thickness. Furthermore they often are at the root of poor chemical or mechanical stability of the entire layer stack in time.

US2009/047509 A1 discloses coated glass pane with a low-e and/or solar control coating comprising at least one layer sequence which comprises at least the following transparent layers: a lower anti-reflection layer; an IR-reflecting layer; an upper anti-reflection layer; and at least one of the anti-reflection layers comprising at least one compound layer containing a mixture of an (oxy)nitride of Si and/or Al and of ZnO.

Various attempts were made at providing glazings with at least one infrared reflecting layer having high chemical durability or mechanical durability, or both chemical and mechanical durability.

The present invention aims at providing for a coated substrate comprising a transparent substrate provided with a stack of thin layers comprising an alternating arrangement of n infrared radiation reflecting (IR) functional layers and n+1 dielectric coatings, with n ≥ 1, such that each functional layer is surrounded by dielectric coatings, characterized in that the stack further comprises two contact layers for at least one of the n infrared radiation reflecting functional layers, comprising an oxide of zinc combined with at least 2 distinct elements, X and Y, selected from the group comprising titanium, aluminium or selected from the group comprising indium, gallium or selected from the group comprising aluminium, magnesium, wherein the two contact layers are above or below and in direct contact with the at least one of the n infrared radiation reflecting (IR) functional layers

and wherein the stack comprises, in order starting from the substrate

(1) A first dielectric layer,
(2) A first contact layer, below and in contact with the first IR functional layer,
(3) An first IR functional layer,
(4) A second contact layer, above and in contact with the first IR functional layer,
(5) A second dielectric layer,
(6) A topcoat layer.

A method to provide for said coated substrates is also provided.

Heat-treated coated substrates and multiple glazing units are provided comprising at least one coated substrate per the present invention.

Last provided is the use of an oxide of zinc combined with at least 2 distinct elements, X and Y, selected from the group comprising titanium, aluminium or selected from the group comprising indium, gallium or selected from the group comprising aluminium, magnesium, in both contact layers for an IR functional layer in a stack of thin layers of a coated substrate, for providing chemical and/or mechanical durability to the coated substrate, for at least 3 days, alternatively at least 5 days, alternatively at least 10 days as evaluated by standard tests provided herein.

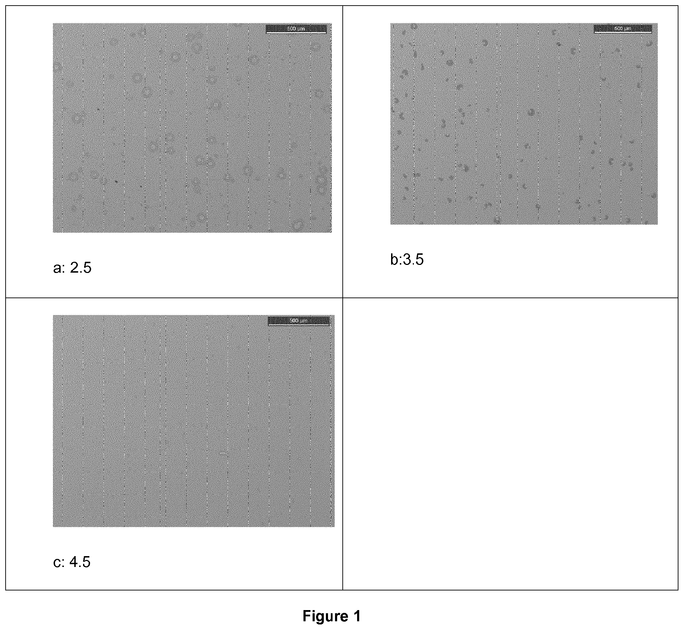

Figure 1 represents the scale based on comparative materials used to rank the samples of the present assessments with regard to the Cleveland test: a: 2.5; b: 3.5; c: 4.5 (total scale from 0:very bad to 5:very good). The rating of c at 4.5 indicates a few black shadows which signal the onset of the degradation. The black dots of rating b at 3.5 represent the coating loss integrity in small round objects. The rating a at 2.5 indicates the defects have further grown to round blisters. Most of the time, the top part of the stack may even be removed, due to the cleaning of the sample, leaving a round crater behind. The presence of holes in the layers will typically lead to the presence of haze in the coating, when looked with an angle to a black background.

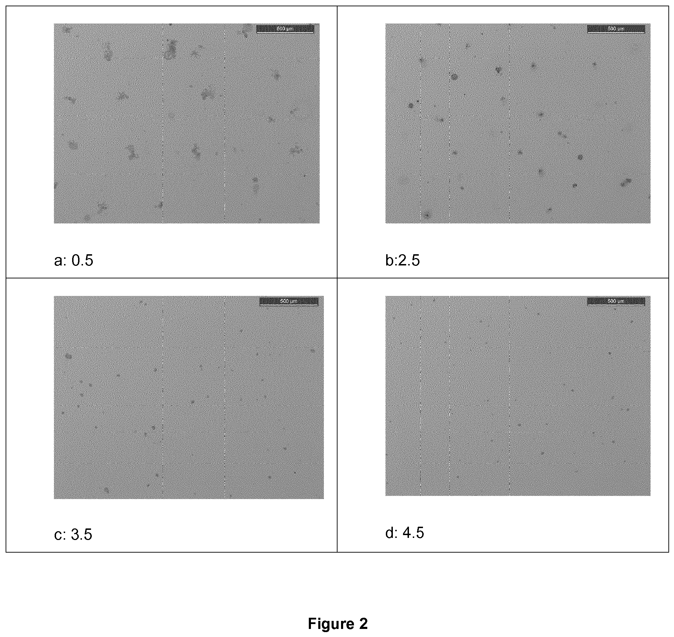

Figure 2 represents the scale based on comparative materials used to rank the samples of the present assessments with regard to the Climatic Chamber test: a: 0.5; b: 2.5; c: 3.5; d: 4.5 (total scale from 0:very bad to 5:very good). The rating of 4.5 (d) indicates defects already forming but remaining limited in size. The rating of 0.5 (a) indicates the defects are quite large. The shape of the defect may be star-like or flower-like.

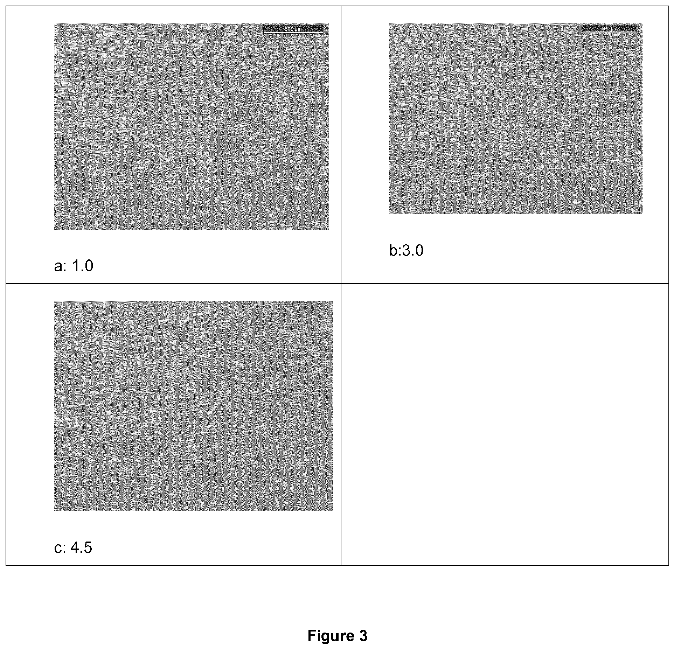

Figure 3 represents the scale based on comparative materials used to rank the samples of the present assessments with regard to the Salt Fog test: a: 1.0; b: 3.0; c: 4.5 (total scale from 0:very bad to 5:very good). The rating a at 1.0 indicates a difference in color, and presence of haze (observable by tilting the samples on a black background), due to the explosion of the blisters in the coating created by the test and the so-created holes. The degradation of the coating is visible by the amount of round corrosion dots, increasing in both density and sizes, as the rating decreases.

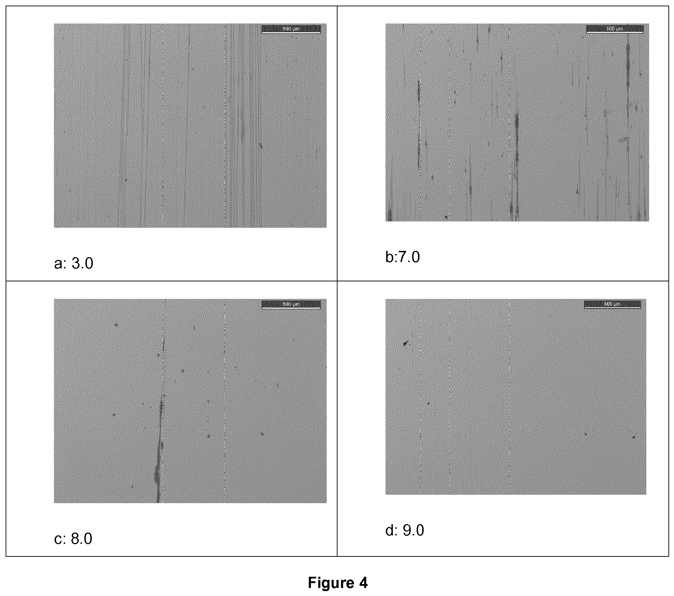

Figure 4 represents the scale based on comparative materials used to rank the samples of the present assessments with regard to the Dry Brush test (DBT): a: 3.0; b: 7.0; c: 8.0; d: 9.0 (total scale from 0:very bad to 10:very good). The mechanical degradation with the present test may not easily represented on pictures. Indeed, the damage is either not visible enough to be caught on camera (minute reflection difference) or too localized to be correctly caught with the optical microscope. The human eye may usually be able to assess in an overview the amount of damaged area as well as the depth of the scratches. The rating a at 3.0 provides a good rendering of scratch damages, compared to the upper values of the scale b to d.

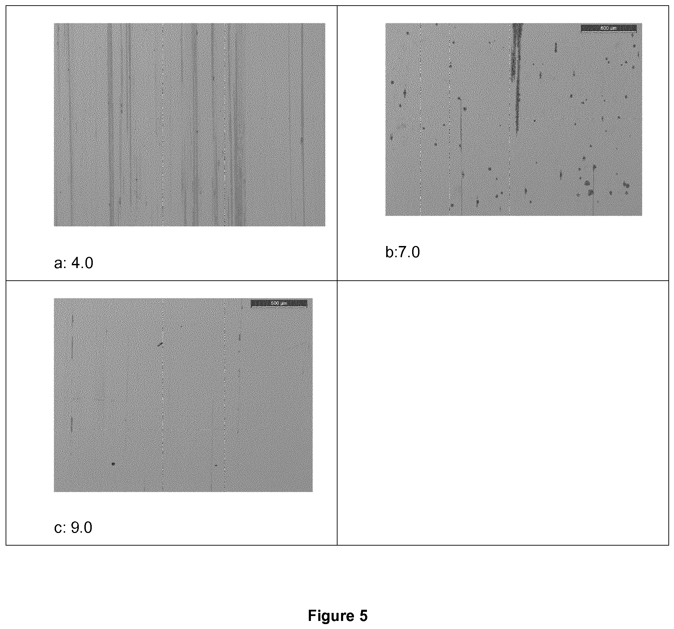

Figure 5 represents the scale based on comparative materials used to rank the samples of the present assessments with regard to the Automated Wet Rub test (AWRT): a: 4.0; b: 7.0; c: 9.0 (total scale from 0:very bad to 10:very good). The rating a of 4.0 indicates serious scratch damages. Scratches become more scarce when moving up the scale , up to ratings b (7.0) and c (9.0). Typically, the human eye is more able to extrapolate the percentage of surface area damaged with scratches, as well as their depth.

The substrate according to the invention may be a glazing substrate, for example a soda-lime, borosilicate, or alumino-silicate glass. The substrate may be regular a clear, colored or extra-clear (i.e. lower Fe content and higher TL) glass substrate, possibly having a thickness typically comprised of from 1 to 10 mm, possibly made using the float process. Further examples of glass substrates include clear, green, bronze, or blue-green glass substrates. However, the invention may also apply to plastic substrates, such as Poly(methyl methacrylate) (PMMA), polyolefins, Polyvinyl chloride (PVC), or mixtures thereof.

When discussing the arrangement of the layers of a multi-layer coating such as the stack of the present invention, it is typically understood that the first layer be the first applied on the substrate, the second being the second layer applied on the substrate, above the first layer. The successive order of the positions is considered relative to the substrate onwards, up to the uppermost layer. When discussing the arrangement of dielectric layers, the first layer will typically be the first dielectric layer when moving away from the substrate, under a first IR functional layer, while the second dielectric layer will typically be the second dielectric layer when moving away from the substrate, typically above the first IR functional layer. As the number of IR functional layers increases, so will the number of dielectric layers.

In the scope of the present invention, the terms "below", "underneath", "under" indicate the relative position of a layer vis a vis a next layer, within the layer sequence starting from the substrate. In the scope of the present invention, the terms "above", "upper" indicate the relative position of a layer vis a vis a next layer, within the layer sequence starting from the substrate.

In the scope of the present invention, the relative positions of the layers within the stack do not necessarily imply direct contact between the layers. That is, some intermediate layer may be provided between the first and second layer. In some instances, a layer may actually be composed of several multiple individual layers. This may be the case for the dielectric layers or for the topcoat layers.

In some instances, the relative position may result in direct contact, such as for the contact layers either above or below an IR functional layer, that is, when present, such layers above or below will typically be in direct contact with said IR functional layer.

The contact layer underneath and in direct contact with the IR reflecting layer may also be referred to as "seed layer". Such seed layer is typically provided to assist in forming a good quality film of the IR functional material, that is, providing for a homogeneous layer of IR functional material.

The contact layer above and in direct contact with an IR reflecting layer may also be referred to as "barrier layer". Such a barrier layer is typically provided to assist in protecting the IR functional material from degradation induced by the formation of any layer above it, for example to protect it from oxygen or oxygenated species which may deteriorate the quality of the IR functional layer and also from deterioration due to heat treatments.

The infrared radiation reflecting (IR) functional layers may typically be provided based on metals such as silver, gold, copper, and platinum. Silver-based layers are typically used, which may consist of silver or possibly be doped with palladium or gold, for example, in a proportion of 5% by weight at most, alternatively of around 1% by weight. The incorporation of a small quantity of doping agent in the silver-based layer may improve the chemical stability of the stack or add other functionalities such as increased light absorption for example.

The infrared radiation reflecting functional layers may each have a thickness ranging of from 4 to 50 nm, alternatively of from 5 to 35 nm, alternatively of from 6 to 35 nm, alternatively of from 7 to 20 nm. These thickness ranges may enable the desired low emissivity and antisolar function to be achieved while retaining a good light transmission.

Unless stated otherwise, all layer thicknesses herein are geometrical layer thicknesses.

In a coating stack with two IR functional layers it may be useful that the thickness of the second IR functional layer, that furthest away from the substrate, be slightly greater than that of the first to obtain a better selectivity. In the case of a coating stack with two IR functional layers, the first IR functional layer may have a thickness, for example, of between 8 and 18 nm and the second IR functional layer may have a thickness between 10 and 20 nm, and greater than the thickness of the first IR functional layer.

In a coating stack with three IR functional layers it may be useful that the thickness of the third and second IR functional layer be slightly greater than that of the first to obtain a better selectivity. In the case of a coating stack with three IR functional layers, the first functional layer may have a thickness, for example, of between 8 and 18 nm and the second and third IR functional layers may have a thickness between 10 and 20 nm, and greater than the thickness of the first IR functional layer.

The dielectric coatings may comprise oxides, nitrides or oxynitrides of Zn, Sn, Ti, Zr, Si, Bi, Nb, or mixtures thereof. Typical dielectric materials are suitable in the scope of the present inventions. These materials may be eventually doped, where examples of dopants include aluminium, zirconium, or mixtures thereof. The dopant or mixture of dopants may be present in an amount up to 15%wt.

Typical examples of dielectric materials include, but are not limited to, silicon based oxides, silicon based nitrides, zinc oxides, tin oxides, mixed zinc-tin oxides, silicon nitrides, silicon oxynitrides, titanium oxides, aluminum oxides, zirconium oxides, niobium oxides, aluminum nitrides, bismuth oxides, mixed silicon-zirconium nitrides, and mixtures of at least two thereof, such as for example titanium-zirconium oxide.

Oxides or nitrides of silicon or aluminum or mixtures thereof are typically suitable for their particular resistance to heat treatments. The expression "layer essentially consisting of silicon nitride" is also understood to mean layers doped with at least one other element and containing up to at most 10% by weight of this at least one other element, said doped layers having dielectric properties that are practically no different from those of pure silicon nitride layers (for example, layers deposited by cathode sputtering processes using a silicon target containing up to 10% by weight aluminum). The dielectric layer may furthermore consist of a plurality of individual layers comprising or essentially consisting of the above materials.

In all instances, the present stack of thin layers is typically realized in absence of (or free of) a compound layer containing a mixture of an (oxy)nitride of Si and/or Al and of ZnO. Such a compound layer is meant in its broadest meaning if atoms of Si and/or Al, Zn, O and N are detectable in the layer independent of how they are bound to each other on the microscopic level but it may mainly be considered as comprising microscopically a mixture of the actual compounds (oxy)nitride of Si and/or Al on the one hand and ZnO on the other.

Several dielectric layers may be more suitable or operable, according to the deposition method used to provide for the layers.

The dielectric layers may each have a thickness ranging of from 0.1 to 200 nm, alternatively of from 0.1 to 150 nm, alternatively of from 1 to 120 nm, alternatively of from 1 to 80 nm. Different dielectric layers may have different thicknesses. That is, the first dielectric layer may have a thickness that is the same or different, greater or smaller, compared to the thickness of the second or third or any other dielectric layer.

When there are two IR functional layers (when n = 2), the second dielectric layer may be referred to as the "internal dielectric layer", as it is sandwiched between two IR functional layers.

When there are three IR functional layers (when n = 3), the second and third dielectric layers may be referred to as "internal dielectric layers", as they are respectively sandwiched between two IR functional layers.

The two contact layers for the infrared radiation reflecting functional layer comprises an oxide based on zinc combined with at least 2 distinct elements, X and Y, selected from the group comprising titanium, aluminium or selected from the group comprising indium, gallium or selected from the group comprising aluminium, magnesium. That is, the two contact layers are typically a combination of at least three elements, one element being zinc and the other 2 distinct elements being selected from the group comprising titanium, aluminium or selected from the group comprising indium, gallium or selected from the group comprising aluminium, magnesium. Such a combination will be hereafter referred to as the zinc-based three-element oxide composition. Typically, the combination of aluminium and gallium with zinc or the combination of tin and aluminium and zinc are not suitable in the scope of the present invention.

As is well known in the art, given that most of these elements may present different oxidation states, the exact stoichiometry is difficult to assess, in particular for oxygen. In most instances the zinc-based three-element oxide composition is fully oxidized or substantially fully oxidized, in order to ensure the absorption coefficient is as low as possible, when considered in the visible wavelength range, that is, from 400 to 800 nm.

Examples of a zinc-based oxide combined with at least 2 distinct elements include Zinc-Indium-Gallium Oxides (IGZO), Zinc-Titanium-Aluminium Oxides (ZTAO), Zinc-Aluminium-Vanadium Oxides, Zinc-Aluminium-Molybdenum Oxides, Zinc-Aluminium-Magnesium Oxides, Zinc-Aluminium-Chromium Oxides, Zinc-Aluminium-Copper Oxides, Zinc-Titanium-Zirconium Oxides.

In some instances, some elements are not optimal for the present invention, their presence as dopant or even as pollutant should be kept as low as possible, for instance below 1at%, below 0.5 at%, or below 0.1 at%. They may be present at maximum 5 at%, or maximum at 2.5 at%.

In other instances, some elements are to be excluded of the zinc-based three-element oxide composition. Such elements that for example lead to bad chemical and/or mechanical durability may include tin, boron, silicon. Typically, the at least one contact layer for the infrared radiation reflecting functional layer is free of tin, boron and silicon.

In some instances, the zinc element is the primary element of said zinc-based three-element oxide composition, and is combined with at least two distinct elements X and Y, selected from the group comprising titanium, aluminium or selected from the group comprising indium, gallium or selected from the group comprising aluminium, magnesium. That is, the zinc-based three-element oxide composition comprises 60 to 99 atomic % of zinc, and 1 to 40 atomic % combined of the at least two distinct elements, X and Y. The atomic percentage of each element, for example zinc, X or Y, is calculated as the atomic ratio of said element to the sum of all other elements, except oxygen. Each X or Y element may be present in the zinc-based three-element oxide composition in an amount of from 0.5 to 39 atomic %, alternatively of from 1 to 30 atomic %, alternatively of from 1 to 25 atomic %, alternatively of from 1 to 10 atomic %, alternatively of from 1 to 5 atomic %, based on the total of the zinc-based three-element oxide composition, the second element making up for the total of the 40 atomic % of the at least two elements X and Y, taking into account the presence of optional dopant(s) or impurities. Such optional dopants or impurities different from X and Y may be present in amounts < 0.5%at. The atomic % and composition details may be determined by an XPS analysis carried out on a single layer of the material applied on a substrate.

The zinc-based three-element oxide composition can be written with chemical formula $Zn_zX_xY_yO_v$, wherein the ratio $z/(z+x+y)$ is from 0.60 to 0.99, the ratio $(x+y)/(z+x+y)$ is from 0.01 to 0.40, the ratio $x/(z+x+y)$ is from 0.005 to 0.39, alternatively from 0.01 to 0.30, alternatively from 0.01 to 0.25 and the ratio $x/(z+x+y)$ is from 0.005 to 0.39, alternatively from 0.01 to 0.30, alternatively from 0.01 to 0.25.

When there are only two distinct elements, X and Y, present, they may be present in a ratio x/y of from 0.05 to 20, alternatively of from 0.1 to 10, relative to each other.

In some instances, the zinc element is not the primary element of said zinc-based three-element oxide composition, but is present in about equivalent amount as the other two distinct elements X and Y, resulting in a zinc-base three-element oxide having 3 main elements, Zn, X and Y. In such instances, a further element or mixture of elements may be provided as dopant, in an amount of up to 5 atomic %. The main 3 elements of the zinc-based three-element oxide composition may thus provide for 95 to 100 atomic% of the zinc-based three-element oxide composition, that is, each of Zinc, X and Y may be provided in amounts of from 20 to 40 atomic% of the zinc-based three-element oxide composition, provided the sum of the amounts of the three elements (Zinc, X and Y) reaches 95 to 100atomic%, taking into account the presence of optional dopant(s) or impurities.

The stack of the present invention must thus comprise two contact layers made of a zinc-based three-element oxide composition described above, as a seed layer (below)and as a barrier layer (above), for at least one of the n IR functional layers present. In some instances, the stack of the present invention may comprise at least one contact layer made of the zinc-based three-element oxide composition described above, either as a seed layer or as a barrier layer, for each one of the n IR functional layer present.

In some instances, the stack may comprise two contact layers composed of a zinc-based three-element oxide composition described above, below (seed layer) and above (barrier layer) each of the n IR functional layers present.

When there are two contact layers composed of a zinc-based three-element oxide composition below (seed layer) and above (barrier layer) an IR functional layer, the barrier and seed layer may be composed of the same or of different zinc-based three-element oxide compositions. That is, both the seed and barrier layer may be composed of the same zinc-based three-element oxide composition, thus may have the same composition. In other cases, the seed (or barrier) layer may be composed of a zinc-based three-element oxide composition 1 and the barrier (or seed) layer may be composed of a zinc-based three-element oxide composition 2, where zinc-based three-element oxide composition 1 is different from zinc-based three-element oxide composition 2.

In some instances, both the seed and barrier layer may be composed of the same zinc-based three-element oxide composition, comprising zinc and at least two distinct elements X and Y, selected from the group comprising titanium and aluminium and/or from the group comprising indium and gallium and/or from the group comprising aluminium and magnesium, alternatively selected from the group comprising titanium and aluminium and/or from the group comprising indium and gallium.

In some instances, when the stack comprises at least 2 IR functional layers, the stack may comprise a seed layer composed of the zinc-based three-element oxide composition, for a first IR functional layers present and a barrier layer composed of zinc-based three-element oxide composition for a second IR functional layer, or vice-versa. In such cases, the barrier and seed layer may be composed of the same or of different zinc-based three-element oxide compositions. That is, both the seed and barrier layer may be composed of the zinc-based three-element oxide composition. In other cases, the seed (or barrier) layer may be composed of a zinc-based three-element oxide composition 1 and the barrier (or seed) layer may be composed of a zinc-based three-element oxide composition 2, where zinc-based three-element oxide composition 1 is different from zinc-based three-element oxide composition 2.

The contact layer of the present invention may have a thickness of from 0.1 to 30 nm, alternatively of from 0.1 to 15 nm, alternatively of from 0.1 to 7 nm. When there is more than one contact layer, the different contact layers may have the same thickness or different thicknesses.

The contact layer underneath a chosen IR functional layer and the contact layer above the same chosen IR functional layer may have a different thickness; or essentially the same thickness, that is, differing by maximum 10%;

or they may have the same thickness.

The stack may further comprise a topcoat layer, present as uppermost layer, and thus forming the last layer of the stack. The topcoat layer may be composed of multiple layers of different material, or may be a single type of material.

An example of such topcoat layer includes a layer made from a silicon nitride or a silicon oxide $SiO_2$ and may be provided above the last dielectric coating, but not necessarily in direct contact with it. Such silicon nitride or a silicon oxide may have a thickness greater than 10 nm, alternatively of at least 12 nm or at least 14 nm, alternatively of at least 15 nm or at least 16 nm. Its thickness is typically of 40 nm at most or 35 nm at most, alternatively of 30 nm at most or 25 nm at most. Silicon nitride is generally more useful than silicon oxide, since it may be easier to deposit industrially by magnetron sputtering and because it may provide in the last dielectric a better mechanical stability and a better resistance to heat treatment than a silicon oxide. This silicon nitride layer may be the last layer of the coating stack. Aluminium may be present in these silicon based layers. Alternatively, this layer could be a layer of aluminium oxide or aluminium nitride. Alternatively, this layer could be a layer of titanium oxide, titanium nitride, silicon oxynitride, tin oxide, zinc oxide, niobium oxide, or mixtures thereof.

A further example of such topcoat layer includes a layer made of oxides or sub stoichiometric oxides of silicon, zirconium, titanium, zinc; alternatively oxides or sub stoichiometric oxides of zirconium, titanium. Typical protective layer include zirconium oxide, titanium-zirconium mixed oxide, silicon-zirconium mixed oxide. Alternatively the topcoat layer may comprise two layers of the topcoat materials cited hereinabove. In such a double topcoat layer, each individual layer may have a thickness of at least 2 nm, alternatively at least 3 nm; alternatively its thickness is at most 20 nm, at most 15 nm or at most 12 nm, more alternatively at most 10 nm or at most 9 nm. Typical protective double topcoat layers comprise a silicon nitride-based layer below a zirconium oxide containing layer, for example a mixed layer of titanium and zirconium.

The topcoat layer, when present, may have a total thickness of at least 2 nm. Its thickness may be of 60 nm at most or 40 nm at most, alternatively 25 nm at most, alternatively 10 nm at most.

The stack of thin layers comprises at least, or consists of, in order starting from the substrate:

(1) A first dielectric layer,
(2) A first contact layer, below and in contact with the first IR functional layer,
(3) An first IR functional layer,
(4) A second contact layer, above and in contact with the first IR functional layer,
(5) A second dielectric layer,
(6) A topcoat layer,

wherein the contact layers independently comprise an oxide of zinc combined with at least 2 distinct elements X and Y, selected from the group comprising titanium, aluminium or selected from the group comprising indium, gallium or selected from the group comprising aluminium, magnesium.

When the stack comprises at last two IR functional layers, an absorbing layer may be provided between two dielectric layers. Such absorbing layer may comprise nickel, chromium, tungsten and/or zirconium. The thickness of such layer may range of from 0.5 to 20 nm, alternatively of from 1 to 10 nm, alternatively of from 1 to 5 nm.

In some embodiments, the stack of thin layers comprises at least, or consists of, in order starting from the substrate:

(1) A first dielectric layer,
(2) A layer composed of a first IR functional layer and two contact layers -one above and one below, and in contact with said first IR functional layer,
(3) A second dielectric layer,
(4) An optional absorbing layer,
(5) A third dielectric layer,
(6) A layer composed of a second IR functional layer and two contact layers - one above and one below, and in contact with said second IR functional layer,
(7) A fourth dielectric layer,
(8) A topcoat layer,

wherein the contact layers independently comprise an oxide of zinc combined with at least 2 distinct elements X and Y, selected from the group comprising titanium, aluminium or selected from the group comprising indium, gallium or selected from the group comprising aluminium, magnesium.

Multiple combinations exist when each IR functional layer either has two contact layers. In such instance, the contact layers may be the same or different. They may also have the same or different thickness, as discussed previously.

In some embodiments, the stack of thin layers comprises at least, or consists of, in order starting from the substrate:

(1) A first dielectric layer,
(2) A first contact layer, below and in direct contact with the first IR functional layer,
(3) A first IR functional layer,
(4) A second contact layer, above and in direct contact with the first IR functional layer,
(5) A second dielectric layer,
(6) An optional absorbing layer,
(7) A third dielectric layer,
(8) A third contact layer, below and in direct contact with the second IR functional layer,
(9) A second IR functional layer,
(10) A fourth contact layer, above and in direct contact with the second IR functional layer,
(11) A fourth dielectric layer,
(12) A topcoat layer,

wherein the contact layers independently comprise an oxide of zinc combined with at least 2 distinct elements X and Y, selected from the group comprising titanium, aluminium or selected from the group comprising indium, gallium or selected from the group comprising aluminium, magnesium.

In such embodiments, the contact layers may all comprise zinc, and at least 2 distinct elements X and Y, selected from the group comprising titanium and aluminium and/or from the group comprising indium and gallium and/or from the group comprising aluminium and magnesium, alternatively selected from the group comprising titanium and, aluminium and/or from the group comprising indium and gallium.

A method to provide for said coated substrate is also disclosed. Typically, stacks of coatings on glass may be provided by various vacuum deposition methods, including magnetron sputtering , LPCVD (low pressure chemical vapor deposition), plasma enhanced chemical vapor deposition PECVD. Individual layers of the same stack may be provided by different deposition methods.

A stack of layer system may for example be sputtered onto a glass substrate of thickness ranging of from 1 to 20 mm, using a known magnetron sputter coater at a line speed of 1 to 10 meters per minute. Parameters includes Power (P) in kW, current (I) in amps, and pressure (Press.) in mbar. The gas flow may be adapted to the layer to be provided, with gases such as argon, oxygen, nitrogen or mixtures thereof.

The zinc-based three-element oxide composition may be provided from a single target comprising the three elements, or may be provided from at least 2 targets, used in conjunction (or co-sputtering) thus providing for a layer of the zinc-based three-element oxide composition. The targets may be metallic targets or ceramic targets that also comprise oxygen. The targets may be planar targets, or alternatively rotating cylindrical magnetron type sputtering targets.

The deposition parameters may be chosen so as to reduce the absorption to a minimum, for example by oxidizing the layer as much as possible.

The coated glass substrate of the present invention may be useful in architectural glazings (door, window, vitrine, insulating glass (IG) window units, etc.), appliance applications (fridge door, oven door, etc.), and transportation applications (vehicle windows, skylights, windshield, side windows), where there is increasing need to have glasses with very pronounced curvatures and/or of complex shape (double curvature, S-shaped curvature, etc.).

Typically, a glass sheet is provided with two opposite surfaces. In the scope of the present invention, the stack of thin layers may be provided on at least one surface. In some instances, the same or a different or no other coating may be provided on the opposite surface.

In further other instances, the glazing may comprise the stack of thin layers unit on one surface, and potentially a self-cleaning coating or a different type of coating on the opposite surface.

Typically, the stack of thin layers may be provided on the surface of the glass substrate facing the interior of a building or vehicle (P2 of a single, non-laminated glass sheet, or P4 of a laminated glass). In some instances, the coating stack may be positioned in contact with the exterior (P1).

In some case, it may be useful to mechanically reinforce the coated glass substrate by a thermal treatment of the glass sheet to improve its resistance to mechanical constraints. It can also be necessary to bend the glass sheet at high temperature for specific applications. In the entire process of manufacturing glazing, it may be advantageous to heat treat glass sheets which are already coated rather than coating already heat-treated glass sheets. These operations are done at relatively high temperature, under which the IR functional layers tend to deteriorate and lose their optical properties and their properties vis-à-vis infrared radiation.

When the coating stack and/or the coated substrate can withstand a heat-treatment of the type tempering or bending without losing the optical and/or energetical properties for which they have been manufactured, said coating stack and/or the coated substrate may be called "heat-treatable" or "temperable".

The present invention provides for a heat treated coated substrate comprising a transparent substrate provided with a stack of thin layers comprising an alternating arrangement of n infrared radiation reflecting (IR) functional layers and n+1 dielectric coatings, with n ≥ 1, such that each functional layer is surrounded by dielectric coatings, characterized in that the stack further comprises at least one contact layer for at least one of the n infrared radiation reflecting functional layers, comprising an oxide of zinc combined with at least 2 distinct elements, X and Y, selected from the group comprising titanium, aluminium or selected from the group comprising indium, gallium or selected from the group comprising aluminium, magnesium, wherein the two contact layers are above and below and in direct contact with the at least one of the n infrared radiation reflecting functional layers.

These thermal treatments comprise heating the coated glass sheet to a temperature of at least 560°C in air, for example between 560°C and 700°C, in particular around 640°C to 670°C, during around 3, 4, 6, 8, 10, 12 or even 15 minutes according to the heat-treatment type and the thickness of the glass sheet. The treatment may comprise a rapid cooling step after the heating step, to introduce a stress difference between the surfaces and the core of the glass so that in case of impact, the so-called tempered glass sheet will break safely in small pieces. If the cooling step is less strong, the glass will then simply be heat-strengthened and in any case offer a better mechanical resistance.

Further heat treatment may be implied in process steps like 1) bending, 2) tempering, 3) sintering of colored ceramic print or silver bus bar print, 4) vacuum sealing of vacuum double glazing and 5) calcination of a wet-coated low reflective coating or antiglare coating.

In some instances, the stack of thin layers may be "self-matchable". This means there is no or only few change in the optical and/or energetical properties, when the coated substrate undergoes a heat treatment of the type tempering or bending. This has for advantage that non heat treated and heat treated products can be placed next to each other for the same application, e.g. within a building facade.

The CIELAB 1976 values (L\*a\*b\*) are typically used to define the tints of the coated substrates. They are measured with illuminant D65/10°.

$$\Delta E^* \text{ (Delta E*)} = \sqrt{\left(\Delta L^*\right)^2 + \left(\Delta a^*\right)^2 + \left(\Delta b^*\right)^2}$$

represents the tint variation during the heat treatment, i.e. the difference between before and after heat treatment colors. As such, the retention of optical and energy properties, virtually unchanged, after heat treatment allows for the use of products that have been heat treated or not one beside the other ("self-matchability"), for example: no or little change in colour in transmission and in reflection ($\Delta E^* \leq 8$, alternatively $\leq 5$, alternatively $\leq 2$) and/or no or little change in light transmission and reflection and energy values, that is, the difference between the values before and after treatment remains $\leq 5$, preferably $\leq 3$, more preferably $\leq 1$, in single glazing.

The present invention provides for a multiple glazing unit comprising at least one coated substrate comprising a transparent substrate provided with a stack of thin layers comprising an alternating arrangement of n infrared radiation reflecting (IR) functional layers and n+1 dielectric coatings, with n ≥ 1, such that each functional layer is surrounded by dielectric coatings, characterized in that the stack further comprises at least one contact layer for at least one of the n infrared radiation reflecting functional layers, comprising an oxide of zinc combined with at least 2 distinct elements, X and Y, selected from the group comprising titanium, aluminium or selected from the group comprising indium, gallium or selected from the group comprising aluminium, magnesium, wherein the two contact layers are above and below and in direct contact with the at least one of the n infrared radiation reflecting functional layers.

The present coated glass substrate may thus be assembled in multiple glazing units like double or triple glazing or laminated glazing, wherein the coated glass substrate is associated with one or more other glass sheet(s), coated or not. The coating stack may be positioned in contact with the space between two sheets of glass, in the case of multiple glazing, or in contact with the adhesive layer, in the case of laminated glazing (P2).

Given its mechanical and chemical resistance, the stack of thin layers of the present glazing unit does not always need edge deletion prior to assembly into a multiple glazing unit and may even reach sufficient mechanical and chemical resistance to be positioned on an external surface of a multiple glazing unit, that is, facing and in contact with the exterior environment or interior environment of the building or vehicle (P1 or P4).

The present invention provides for the use of an oxide of zinc combined with at least 2 distinct elements, X and Y, selected from the group comprising titanium, aluminium or selected from the group comprising indium, gallium or selected from the group comprising aluminium, magnesium, wherein the two contact layers are above and below and in direct contact with the at least one of the n infrared radiation reflecting functional layers, as a contact layer for at least one IR functional layer in a stack of thin layers of a coated substrate, for providing chemical and/or mechanical durability to the coated substrate, for at least 3 days, alternatively at least 5 days, alternatively at least 10 days as evaluated by standard tests provided herein.

Furthermore, a method is disclosed to provide for chemical or mechanical durability of a coated substrate comprising a transparent substrate by providing the substrate with a stack of thin layers comprising an alternating arrangement of n infrared radiation reflecting (IR) functional layers and n+1 dielectric coatings, with n ≥ 1, such that each functional layer is surrounded by dielectric coatings, wherein the stack further comprises at least one contact layer for at least one of the n infrared radiation reflecting functional layers, comprising an oxide of zinc combined with at least 2 distinct elements, X and Y, selected from the group comprising titanium, aluminium or selected from the group comprising indium, gallium or selected from the group comprising aluminium, magnesium, wherein the two contact layers are above and below and in direct contact with the at least one of the n infrared radiation reflecting functional layers, wherein the two contact layers are above and below and in direct contact with the at least one of the n IR functional layers.

Last, a method is disclosed to provide for chemical and mechanical durability of a coated substrate comprising a transparent substrate by providing the substrate with a stack of thin layers comprising an alternating arrangement of n infrared radiation reflecting (IR) functional layers and n+1 dielectric coatings, with $n \geq 1$, such that each functional layer is surrounded by dielectric coatings, wherein the stack further comprises, for at least one of the n infrared radiation reflecting functional layers, one contact layer below and in direct contact with and one contact layer above and in direct contact with said at least one of the n infrared radiation reflecting functional layers, both contact layers comprising an oxide of zinc combined with at least 2 distinct elements, X and Y, selected from the group comprising titanium, aluminium or selected from the group comprising indium, gallium or selected from the group comprising aluminium, magnesium, wherein the two contact layers are above and below and in direct contact with the at least one of the n infrared radiation reflecting functional layers.

In the presence of at least one contact layer above or below and in direct contact with at least one of the n IR functional layers, chemical durability is improved, or mechanical durability is improved, over a situation where no such contact layer is provided.

In the presence of one contact layer above (and in direct contact with) and one contact layer below (and in direct contact with) at least one given IR functional layer, both the chemical durability and the mechanical durability are improved, over a situation where no such contact layer is provided or over a situation where only one such contact layer is provided. Improvement is thus optimal when at least one IR functional layer is provided with both a contact layer above (and in direct contact with) and one contact layer below (and in direct contact with) said one IR functional layer.

The present coated substrate is thus highly durable, that is, is able to withstand certain chemical and/or mechanical tests detailed below, in some instances, both before and after an optional heat treatment. Optical parameters may be optimized without departing from the durability achieved by the stack of thin layers applied on the presently claimed coated substrates.

"Chemical durability" or "chemically durable" is used herein synonymously with the term of art "chemical stability" or "chemically resistant".

## EXAMPLES

Chemical and mechanical stability will be evaluated per the following test methods, well known by the skilled person in the art.

Chemical durability in the scope of the present invention includes the test methods of the Cleveland test, the Climatic chamber test and the Salt fog test.

### Cleveland test

The Cleveland test is run according to standard ISO 6270-1:1998, for at least 2 days, alternatively 5 days, alternatively 10 days.

### Climatic chamber test (CC)

The test consists in placing the samples in a chamber filled with an atmosphere of $H_2O$ and subjected to temperature cycles each of 2 hours, during which the temperature varies from 45°C to 55°C returning to 45°C, for at least 2 days, alternatively 5 days, alternatively 10 days.

### Salt fog test

This test consists in subjecting the sample to the action, in a chamber maintained at 35°C, of a salt fog formed by spraying an aqueous solution containing 50 g/l sodium chloride (full details of this test are set out in International Standard ISO 9227-1990), for an exposure time of at least 5 days, alternatively at least 10 days.

Mechanical durability in the scope of the present invention includes the test methods of the Automatic Wet Rub test, and the Dry Brush Test, before and after a thermal treatment.

### Automatic Wet Rub Test (AWRT)

A piston covered with a wet cotton cloth that is kept wet is brought into contact with the layer to be evaluated and moved back and forth over its surface. The piston bears a weight so as to apply a force of 33 N to a finger having a diameter of 17 mm. The rubbing of the cotton over the coated surface damages (removes) the layer after a certain number of cycles. The test is used to define the limit at which the layer discolors (partial removal of the layer) and scratches appear therein. The test is carried out for 10, 50, 100, 250, 500 and 1000 cycles in various separate locations on the sample. The sample is observed under an artificial sky in order to determine whether discoloration or scratching of the sample is visible in reflection. The AWRT result indicates the number of cycles resulting in no or very little degradation (invisible to the naked eye under a uniform artificial sky at a distance of 80 cm from the sample).

Dry Brush Test

The dry brush test (DBT) is run according to standard ASTM D2486-00 (test method "A"), alternatively for at least 250 cycles, alternatively for at least 500 cycles. This test may also be carried out on samples after they have been subjected to heat treatment (here referred to as "bake").

The results for each test described above are obtained by visually assessing samples in comparison with a defined scale of reference samples. Scales for the Cleveland climatic chamber and salt fog tests are based on an internal scale from 0 to 5, with 0 corresponding to a standard sample having critical deterioration (such as pixels, deep dots, stretch marks and so on). The value of 5 corresponds to a perfect or substantially perfect surface, free of any deterioration sign. The intermediate values (down to the 0.25 unit), correspond to samples of the internal scale having different levels of deterioration, ranked in order of level of deteriorations. Acceptable values are from 3 to 5. A second internal scale is set up for the DBT and AWRT tests, ranging from 0 to 10, with acceptable values of from 6 to 10. One value is typically the average of at least 3 samples for one experiment. Comparative examples in the tables below were prepared along the examples according to the invention as internal verification of the procedure for each "run" of experiment (set up in the below Tables).

The transparent substrate used in the present examples of glazing provided with a stack of thin layers stacks was standard float soda-lime, clear, 4 mm thickness, thoroughly cleaned before any coating deposition.

The bake conditions involve placing the sample inside a convection furnace at a temperature of 670°C during 4 to 5 minutes.

In the following tables:

- Ag represents silver
- AZO1% represents Zinc oxide doped with 1%wt aluminium oxide
- AZO2% represents a ceramic target comprising zinc oxide doped with 2%wt aluminium oxide
- GZO represents ZnO with 5.7%wt $Ga_2O_3$
- SiN represents a silicon nitride
- TXO is a substoechiometric titanium oxide, provided from a target of $TiO_x$ with x equal to 1.65 up to 1.85.
- TZO represents Titanium-Zirconium Oxide provided from a ceramic target composed of $TiO_x/ZrO_2$ [65/35 wt.% - TZO65], with ($Y_2O_3$) impurities present in the target
- ZnAlO represents Zinc oxide doped with 2%wt aluminium oxide provided from a metallic target of Zn with 2% wt of Aluminium
- ZnO represents Zinc oxide without dopant, provided from a Zinc metallic target
- ZSO5 represents a zinc-tin mixed oxide in which the proportion of zinc-tin is close to 50-50% by weight ($Zn_2SnO_4$)
- ZTO represents Zinc oxide, doped with 9.4%wt titanium

Zinc-based three element oxides in the following tables

- ZTAO-1 to 6 represents Zinc-Titanium-Aluminium Oxide co-sputtered in variable proportions within the ranges of the present invention, from a target of Zinc oxide doped with 2%wt aluminium oxide and from a target of $TiO_x$ doped with 12% aluminium oxide. ZTAO-3 samples were measured at Zn:Ti:Al composition of 79:12:9 at% in the contact layer
- ZTAO-7 represents a Zinc-Titanium-Aluminium Oxide, provided from a target composed of ZnO: $TiO_x$:$Al_2O_3$ in proportions of ZnO 85-95% wt, $TiO_x$ 5-15% wt and $Al_2O_3$ 1.5-3 wt%, providing for composition of Zn:Ti:Al of 86.3:10.4:3.3 at% in the contact layer
- IGZO-1 represents Indium-Gallium-Zinc Oxide - co-sputtered from a target of $Ga_2O_3$-ZnO 5.7 %wt and from a target of ITO ($In_2O_3$-$SnO_2$ 90:10 %wt) - IGZO-1 is characterized by a composition ZnO:In2O3:$Ga_2O_3$ = 85.5:7.1:7.5 %wt (with an amount of $SnO_2$ under the detection limit), providing for amount of Zn:In:Ga = 88.9:4.3:6.7 at% in the contact layer
- IGZO-2 represents Indium-Gallium-Zinc Oxide - co-sputtered from $Ga_2O_3$-ZnO 5.7 %wt and ITO ($In_2O_3$-$SnO_2$ 90:10 %wt) - IGZO-2 is characterized by a composition ZnO:In2O3:$Ga_2O_3$ = 71.1:23.3:5.7 %wt (with an amount of $SnO_2$

under the detection limit), providing for amount of Zn:In:Ga = 79.3:15.2:5.5 at% in the contact layer

- IGZO-3 represents Indium-Gallium-Zinc Oxide, provided from a target composed of $ZnO:In_2O3.Ga_2O_3$ in proportions of ZnO 70-80%wt, $In_2O_3$ 20-30 %wt, $Ga_2O_3$ 1-5 %wt, providing for amount of Zn:In:Ga = 82.2:12.6:5.1 at% in the contact layer

- ZSAO-1 to 5 represent Zinc-Tin-Aluminium Oxide co-sputtered in variable proportions from a target of Zinc oxide doped with 2%wt aluminium oxide and from a target of $ZnSnO_x$, for a theoretical layer of 10 nm thickness on a glass substrate: that is, AZO2%/ZSO5 => ZSAO-1 is set at a ratio of 95/5; ZSAO-2 ratio of 90/10; ZSAO-3 ratio of 85/15; ZSAO-4 ratio of 80/20; ZSAO-5 ratio of 75/25.

- GAZO-1 to 5 represent Zinc-Gallium-Aluminium Oxide co-sputtered in variable proportions from a target of Zinc oxide doped with 2%wt aluminium oxide and from a target of GZO (ZnO with 5.7%wt $Ga_2O_3$), for a theoretical layer of 10 nm thickness on a glass substrate: that is, AZO2%/GZO => GAZO-1 is set at a ratio of 90/10; GAZO-2 ratio of 75/25; GAZO-3 ratio of 50/50; GAZO-4 ratio of 25/75; GAZO-5 ratio of 10/90.

Unless otherwise indicated, standard deposition methods for the seed layers are based on a gas flow of a 80/20 mixture of oxygen and argon.

Unless otherwise indicated, the Examples and Comparative examples to follow will have fixed thicknesses of the layers underneath and above the IR functional silver layer. The sum of the thicknesses of the ZSO5 layer underneath the Ag layer and of the seed layer will be fixed to 33.5 nm. The sum of the thicknesses of the ZSO5 layer above the Ag layer and of the barrier layer will be fixed to 25 nm (not including the SiN layer). When a topcoat is present, the topcoat will be included in the calculation, and as such, the sum of the thicknesses of the ZSO5 layer above the Ag layer, of the barrier layer and of the topcoat layer will be fixed to 25 nm (not including the SiN layer).

For example, when ZSO5 is indicated (28.5 or 24.5 nm), the thickness of the barrier layer will be such that the sum = 33.5 nm, that is, the barrier layer will have a thickness of either 5 nm or 9 nm. In some instances, when ZSO5 is indicated (28.5 to 24.5 nm), it means the thickness of the ZSO5 layer may be of 28.5 nm, 24.5 nm and also of a value in between, as long as the sum of the thickness with the barrier layer = 33.5 nm.

### Examples 1 to 6 - Comparative example C1.a

Examples 1 to 6 were prepared according to one embodiment of the invention, in which the two contact layers for the IR functional layer, that is, the seed and the barrier layers, are made of a zinc-based three-element oxide composition, namely ZTAO, such that:

Glass/ZSO5 (24.5 nm)/ZTAO (9 nm)/Ag (18 nm)/ ZTAO (5 nm)/ZSO5 (20 nm)/SiN (20 nm) .

In Examples 1 to 6, the ZTAO-1 to ZTAO-6 layers were obtained by co-sputtering from a target of AZO1% (1% Alumina doping in ZnO) with a target of $TiAlO_x$ (12 % $Al_2O_3$ in TiOx). The power on the $TiAlO_x$ target was progressively increased to produce the different types of ZTAO-1 to ZTAO-6. A XPS analysis of the sample of layer ZTAO-3 provided a composition of Zn:Ti:Al ratio equal to 79:12:9 at%, with a ratio of Ti/Al = 1.3.

Comparative example C1.a was prepared according to examples of the prior art, where the seed layer for the IR functional layer is of Zinc oxide (no dopant) and the barrier layer for the IR functional layer is of Zinc oxide, doped with aluminium oxide (2%wt) such that:

Glass/ZSO5 (28.5 nm)/ZnO (5 nm)/Ag (18 nm)/AZO (5 nm)/ ZSO5 (20 nm)/SiN (20 nm) .

Results for the various tests are provided in Table 1 (average values for multiple repeated trials for each example and Comparative example). Results clearly indicate that Examples 1 to 6 are better than Comparative example C1.a in terms of chemical resistance and are equivalent if not better in terms of mechanical resistance. An optimum is obtained for the composition ZTAO-3, especially with regard to the Salt fog test.

**TABLE 1**

| Example | C1.a | 1 | 2 | 3 | 4 | 5 | 6 |
|---|---|---|---|---|---|---|---|
| Materials Seed/ Barrier | ZnO / AZO2% | ZTAO-1 / ZTAO-1 | ZTAO-2 / ZTAO-2 | ZTAO-3 / ZTAO-3 | ZTAO-4 / ZTAO-4 | ZTAO-5 / ZTAO-5 | ZTAO-6 / ZTAO-6 |
| Thicknesses Seed/ Barrier (nm) | 5/5 | 9/5 | 9/5 | 9/5 | 9/5 | 9/5 | 9/5 |
| Cleveland 10 days | 1.4 | 3.0 | 2.3 | 3.0 | 4.5 | 4.8 | 4.8 |
| CC 10 days | 0.2 | 1.5 | 1.8 | 1.8 | 1.5 | 1.5 | 1.3 |
| SF 10 days | 0.1 | 3.0 | 3.8 | 4.0 | 2.8 | 1.5 | 1.0 |

(continued)

| Example | C1.a | 1 | 2 | 3 | 4 | 5 | 6 |
|---|---|---|---|---|---|---|---|
| DBT 500 cycles | 9.2 | 9.0 | 9.3 | 10.0 | 9.3 | 9.5 | 9.5 |
| DBT 500 cycles + bake | 7.8 | 7.0 | 6.5 | 9.5 | 7.0 | 6.5 | 6.0 |
| AWRT 500 cycles | 9.6 | 8.5 | 9.8 | 9.3 | 9.3 | 9.3 | 6.0 |

## Example 7 - Comparative examples C1.b and C2

Example 7 was prepared according to one embodiment of the invention, comprising two contact layers for the IR functional layer, that is, the seed and the barrier layers, made of a zinc-based three-element oxide composition, namely ZTAO, such that:
Glass/ZSO5 (24.5 nm)/ZTAO-7 (9 nm)/ Ag (18 nm)/ ZTAO-7 (5 nm)/ZSO5 (20 nm)/SiN (20 nm) .
Comparative example C1.b was prepared in the same manner as Comparative example C1.a.
Comparative example C2 was prepared according to examples of the prior art, where the two contact layers, that is, seed and barrier layer for the IR functional layer, comprise Zinc oxide, doped with titanium (9.4%wt), such that:
Glass/ZSO5 (24.5 nm)/ZTO (9 nm)/Ag (18 nm)/ ZTO (5 nm)/ZSO5 (20 nm)/SiN (20 nm) .
Results for the various tests are provided in Table 2 (average values for multiple repeated trials for each example and Comparative example). Results clearly indicate that the glazing of Example 7 possesses the best chemical and mechanical resistance over the various parameters evaluated.

**TABLE 2**

| Example | C1.b | C2 | 7 |
|---|---|---|---|
| Materials Seed/Barrier | ZnO / AZO2% | ZTO / ZTO | ZTAO-7 / ZTAO-7 |
| Thicknesses Seed/Barrier (nm) | 5/5 | 9/5 | 9/5 |
| Cleveland 10 days | 1.0 | 3.8 | 4.4 |
| CC 10 days | 1.3 | 0.3 | 0.9 |
| SF 10 days | 1.0 | 1.3 | 3.3 |
| DBT 500 cycles | 7.3 | 7.2 | 7.7 |
| DBT 500 cycles + bake | 4.3 | 3.5 | 5.5 |
| AWRT 500 cycles | 10.0 | 2.7 | 8.5 |

## Examples 8 and 9 - Comparative examples C1.c, C1', C3 and C3'

Examples 8 and 9 (both not according to the invention) were prepared according to one embodiment of the invention, where at least one of the contact layers is made of the zinc-based three-element oxide composition, namely the barrier layer, here either made of IGZO-1 or IGZO-2, respectively, and with a seed layer made of ZnO, such that:
Glass/ZSO5 (28.5 nm)/ZnO (5 nm)/Ag (18 nm)/ IGZO-1 (9 nm)/ZSO5 (16 nm)/SiN (20 nm) .
Comparative example C1.c was prepared in the same manner as Comparative example C1.a. Comparative example C1' was prepared in the same manner as Comparative example C1.a., except that the barrier layer of AZO was 9 nm thick and the subsequent layer of ZSO5 was 16 nm thick.
Comparative examples C3 and C3' were prepared with a seed layer made of ZnO and a barrier layer made of GZO, the latter either 5 nm or 9 nm thick, with the subsequent layer of ZSO5 having thicknesses of 20 or 16 nm, respectively, such that:
Glass/ZSO5 (28.5 nm)/ZnO (5 nm)/Ag (18 nm)/ GZO (5 or 9 nm)/ZSO5 (20 or 16 nm) / SiN (20 nm) .
Results for the various tests are provided in Table 3 (average values for multiple repeated trials (at least 3) for each example and Comparative example). Results clearly indicate that the glazings of Examples 8 and 9 provide the best compromise of chemical and mechanical resistance for the various parameters evaluated. Indeed, Examples 8 and 9 based on an IGZO barrier layer remain more stable than Comparative examples C1.b and C1' based on a AZO barrier layer through the Cleveland and Climatic chamber tests; and they also remain more stable than Comparative examples C3 and C3' based on a GZO barrier layer through the Salt fog test.

**TABLE 3**

| Example | C1.c | C1' | C3 | C3' | 8 | 9 |
|---|---|---|---|---|---|---|
| Materials Seed/Barrier | ZnO / AZO2% | ZnO / AZO2% | ZnO / GZO | ZnO / GZO | ZnO / IGZO-1 | ZnO / IGZO-2 |
| Thicknesses Seed/Barrier (nm) | 5/5 | 5/9 | 5/5 | 5/9 | 5/9 | 5/9 |
| Cleveland 10 days | 1.5 | 0.5 | 3.5 | 1.0 | 3.5 | 3.0 |
| CC 10 days | 1.9 | 2.5 | 3.5 | 3.0 | 3.0 | 2.5 |
| SF 10 days | 0.8 | 2.0 | 0.5 | 1.5 | 2.0 | 2.0 |
| DBT 500 cycles | 8.4 | 9.9 | 8.5 | 8.0 | 8.5 | 8.5 |
| DBT 500 cycles + bake | 8.3 | 9.5 | 8.0 | 4.0 | 7.0 | 9.0 |
| AWRT 500 cycles | 6.6 | 9.7 | 3.0 | 9.7 | 9.7 | 9.7 |

**Examples 10 and 11 - Comparative examples C1.c and C4**

Examples 10 and 11 (both not according to the invention) were prepared, where at least one of the contact layers, namely the seed layer, is made of a zinc-based three-element oxide composition, here either made of IGZO-1 or IGZO-2, respectively, and with a barrier layer made of AZO, such that:
Glass/ZSO5 (28.5 nm)/ IGZO-1 or IGZO-2 (5 nm)/Ag (18 nm)/ AZO (5 nm)/ZSO5 (20 nm)/SiN (20 nm) .

Comparative example C1.c described above is here used again for the sake of comparison.

Comparative example C4 was prepared with a seed layer made of GZO, and a barrier layer made of AZO, such that:
Glass/ZSO5 (28.5 nm)/GZO (5 nm)/Ag (18 nm)/AZO (5 nm)/ZSO5 (20 nm) / SiN (20 nm) .

Results for the various tests are provided in Table 4 (average values for multiple repeated trials, at least 3, for each example and Comparative example). Results clearly indicate that the glazings of Examples 10 and 11 provide the best compromise of chemical and mechanical resistance for the various parameters evaluated. Indeed, Examples 10 and 11 based on an IGZO seed layer remain more stable than Comparative example C4 based on a GZO seed layer through the Cleveland and AWRT tests; and they also remain more stable than Comparative example C1.c based on a ZnO barrier layer (above) through the Cleveland and Climatic chamber tests.

**TABLE 4**

| Example | C1.c | C4 | 10 | 11 |
|---|---|---|---|---|
| Materials Seed/Barrier | ZnO / AZO2% | GZO / AZO2% | IGZO-1 / AZO2% | IGZO-2 / AZO2% |
| Thicknesses Seed/Barrier (nm) | 5/5 | 5/5 | 5/5 | 5/5 |
| Cleveland 10 days | 1.5 | 1.5 | 2.5 | 2.5 |
| CC 10 days | 1.9 | 3.5 | 3.5 | 3.5 |
| SF 10 days | 0.8 | 1.5 | 1.0 | 1.0 |
| DBT 500 cycles | 8.4 | 8.0 | 9.0 | 8.0 |
| DBT 500 cycles + bake | 8.3 | 7.5 | 9.0 | 8.0 |
| AWRT 500 cycles | 6.6 | 1.0 | 3.0 | 4.0 |

**Examples 12 and 13 - Comparative example C1.d**

Examples 12 and 13 were prepared according to one embodiment of the invention, wherein two contact layers for the IR functional layer, that is, the seed and the barrier layers are made of a zinc-based three-element oxide composition, namely ZTAO-7 or IGZO-3, respectively, such that:

Glass/ZSO5 (28.5 to 24.5 nm)/ seed (5 to 9 nm)/Ag (18 nm)/ barrier (5 to 9 nm)/ZSO5 (20 to 16 nm)/SiN (20 nm), where the ZSO5 layer and seed layer underneath the Ag layer sum up to 33.5 nm, and the ZSO5 layer and barrier layer above the Ag layer sum up to 25 nm.

The results are based on the average of the results provided by the combinations 5nm/5nm, 5nm/9nm, 7nm/7nm, 9nm/5nm, and 9nm/9nm.

Comparative example C1.d was prepared in the same manner as Comparative example C1.a.

Results for the various tests are provided in Table 5 (average values for multiple repeated trials for each example and Comparative example). Results indicate that the glazings of Examples 12 and 13 provide the best compromise of chemical and mechanical resistance for the various parameters evaluated. Indeed, Examples 12 and 13 based on the seed and barrier layers both made of ZTAO-7 or of IGZO-3 remain more stable than Comparative example C1.d through the Cleveland, Climatic chamber and Salt fog tests. Example 13 is about equivalent to Comparative example C1.d when considering the DBT (with or without bake) and ARWT tests.

**TABLE 5**

| Example | C1.d | 12 | 13 |
|---|---|---|---|
| Materials Seed/Barrier | ZnO/ AZO2% | ZTAO-7 / ZTAO-7 | IGZO-3 / IGZO-3 |
| Thicknesses Seed/Barrier (nm) | 5/5 | 5-9/5-9 | 5-9/5-9 |
| Cleveland 10 days | 1.0 | 3.8 | 4.8 |
| CC 10 days | 1.5 | 2.3 | 2.7 |
| SF 10 days | 1.0 | 4.0 | 4.0 |
| DBT 500 cycles | 8.5 | 5.0 | 7.5 |
| DBT 500 cycles + bake | 6.0 | 4.6 | 6.0 |
| AWRT 500 cycles | 10.0 | 6.3 | 8.2 |

### Examples 14 to 16 - Comparative example C1.e

Examples 14 to 16 were prepared according to one embodiment of the invention, wherein the two contact layers for the IR functional layer, that is, the seed and the barrier layers, are made of a zinc-based three-element oxide composition, namely either ZTAO-7 or IGZO-3, and where the seed and barrier layers may be the same or different, such that:

Glass/ZSO5 (28.5 to 24.5 nm)/ seed (5 to 9 nm)/Ag (18 nm)/ barrier (5 to 9 nm)/ZSO5 (20 to 16 nm)/SiN (20 nm), where the ZSO5 layer and seed layer underneath the Ag sum up to 33.5 nm, and the ZSO5 layer and barrier layer above the Ag sum up to 25 nm.

The results are based on the average of the results provided by the combinations 5nm/5nm, 5nm/9nm, 7nm/7nm, 9nm/5nm, and 9nm/9nm.

Comparative example C1.e was prepared in the same manner as Comparative example C1.a.

Results for the various tests are provided in Table 6 (average values for multiple repeated trials for each example and Comparative example). Results indicate that the glazings of Examples 14 to 16 provide various options to tune the optimal composition with regard to the conditions of use of the glazing. Examples 14 to 16 remain more stable than Comparative example C1.e through the Cleveland, Climatic chamber and Salt fog tests.

**TABLE 6**

| Example | C1.e | 14 | 15 | 16 |
|---|---|---|---|---|
| Materials Seed/Barrier | ZnO / AZO2% | IGZO-3 / ZTAO-7 | ZTAO-7 / IGZO-3 | IGZO-3 / IGZO-3 |
| Thicknesses Seed/Barrier (nm) | 5/5 | 5-9/5-9 | 5-9/5-9 | 5-9/5-9 |
| Cleveland 10 days | 1.3 | 4.6 | 4.8 | 4.6 |
| CC 10 days | 1.9 | 3.1 | 2.1 | 3.4 |
| SF 10 days | 0.4 | 3.8 | 2.6 | 3.3 |
| DBT 500 cycles | 9.8 | 9.3 | 9.3 | 9.4 |

(continued)

| Example | C1.e | 14 | 15 | 16 |
|---|---|---|---|---|
| DBT 500 cycles + bake | 9.6 | 9.1 | 7.7 | 9.2 |
| AWRT 500 cycles | 8.6 | 9.1 | 6.6 | 7.5 |

## Examples 17 to 19 - Comparative example C5

Examples 17 to 19 (all three not according to the invention) were prepared, wherein at least one contact layer for the IR functional layer, namely the barrier layer, is made of a zinc-based three-element oxide composition, namely ZTAO-7, such that:

Glass/ZSO5 (28.5 to 24.5 nm)/ seed (5 to 9 nm)/Ag (18 nm)/ barrier (5 to 9 nm)/ZSO5 (16.5 to 12.5 nm)/SiN (20 nm)/TZO (3.5 nm)
where the ZSO5 layer and seed layer underneath the Ag sum up to 33.5 nm, and the ZSO5 layer, barrier layer and topcoat above the Ag sum up to 25 nm.

The results are based on the average of the results provided by the combinations 5nm/5nm, 5nm/7.5nm, 9nm/5nm, and 9nm/9nm.
The seed layer of Example 18 was provided under a flow of Argon, while the seed layer of Example 19 was provided under a flow of a 50/50 mixture of oxygen and argon.
Comparative example C5 was prepared with a seed layer made of ZnAlO and a barrier layer of AZO, each of 5 nm thickness, such that:
Glass/ZSO5 (28.5 nm)/ ZnAlO (5 nm)/Ag (18 nm)/AZO (5 nm)/ZSO5 (16.5 nm)/SiN (20 nm) /TZO (3.5 nm) .
Results for the various tests are provided in Table 7 (average values for multiple repeated trials for each example and Comparative example). Results indicate that the glazings of Examples 17 to 19 provide various options to tune the optimal composition with regard to the conditions of use of the glazing. Examples 17 to 19 remain more stable than Comparative example C5 through the Cleveland test, before and after bake and through the climatic chamber test after bake.

**TABLE 7**

| Example | C5 | 17 | 18 | 19 |
|---|---|---|---|---|
| Materials Seed/Barrier | ZnAlO / AZO2% | ZnAlO / ZTAO-7 | AZO / ZTAO-7 | AZO / ZTAO-7 |
| Thicknesses Seed/Barrier (nm) | 5/5 | 5-9/5-9 | 5-9/5-9 | 5-9/5-9 |
| Before Bake | | | | |
| Cleveland 10 days | - | 3.7 | 3.9 | 3.7 |
| CC 10 days | 4.3 | 4.4 | 4.0 | 4.3 |
| SF 10 days | 1.5 | 1.1 | 1.3 | 1.0 |
| DBT 500 cycles | 9.0 | 8.3 | 9.1 | 9.0 |
| DBT 500 cycles + bake | 9.0 | 7.0 | 8.3 | 8.5 |
| After Bake | | | | |
| Cleveland 10 days | 0.3 | 1.9 | 1.9 | 2.3 |
| CC 10 days | 3.5 | 4.3 | 4.0 | 4.1 |
| SF 10 days | 1.0 | 0.9 | 0.8 | 0.8 |

## Examples 20 to 23 - Comparative example C5

Examples 20 to 23 were prepared according to one embodiment of the invention, wherein the two contact layers for the IR functional layer, that is, the seed and the barrier layers, are made of a zinc-based three-element oxide composition, namely either ZTAO-7 or IGZO-3, where the seed and barrier layers may be the same or different, such that:

Glass/ZSO5 (28.5 to 24.5 nm)/ seed (5 to 9 nm)/Ag (18 nm)/ barrier (5 to 9 nm)/ZSO5 (16.5 to 12.5 nm)/SiN (20 nm)/TZO (3,5 nm)

where the ZSO5 layer and seed layer underneath the Ag sum up to 33.5 nm, and the ZSO5 layer, barrier layer and topcoat above the Ag sum up to 25 nm.

Comparative example C5 described above is here used again for the sake of comparison.

The results are based on the average of the results provided by the combinations 5nm/5nm, 5nm/7.5nm, 9nm/5nm, and 9nm/9nm.

The seed layers of Examples 20 and 22 were provided under a flow of Argon, while the seed layer of Examples 21 and 23 were provided under flow of a 50/50 mixture of oxygen and argon.

Results for the various tests are provided in Table 8 (average values for multiple repeated trials for each example and Comparative example). Results indicate that the glazings of Examples 20 to 23 remain more stable than Comparative example C5 through the Cleveland and Salt fog tests, before and after bake.

### TABLE 8

| Example | C5 | 20 | 21 | 22 | 23 |
|---|---|---|---|---|---|
| Materials Seed/Barrier | ZnAlO / AZO2% | ZTAO-7 (Ar) / ZTAO-7 | ZTAO-7 (Ar-O2) / ZTAO-7 | IGZO-3 (Ar) / ZTAO-7 | IGZO-3 (Ar-O2) / ZTAO-7 |
| Thicknesses Seed/ Barrier (nm) | 05-May | 5-9/5-9 | 5-9/5-9 | 5-9/5-9 | 5-9/5-9 |
| Before Bake | | | | | |
| Cleveland 10 days | 0.5 | 3.6 | 3.4 | 3.4 | 4.2 |
| CC 10 days | 4.3 | 4.2 | 4.0 | 4.6 | 3.9 |
| SF 10 days | 1.5 | 2.8 | 4.5 | 2.2 | 3.0 |
| DBT 500 cycles | 9.0 | 9.0 | 9.5 | 9.4 | 8.5 |
| DBT 500 cycles + bake | 9.0 | 8.7 | 8.1 | 8.9 | 7.3 |
| After Bake | | | | | |
| Cleveland 10 days | 0.3 | 4.2 | 4.0 | 4.5 | 3.1 |
| CC 10 days | 3.5 | 4.0 | 4.2 | 4.2 | 4.2 |
| SF 10 days | 1.0 | 3.0 | 3.0 | 1.9 | 1.8 |

### Examples 24 to 29 - Comparative examples C6 and C7

Examples 24 to 27 (all four not according to the invention) were prepared, wherein at least one contact layer for the IR functional layer, either the barrier layer or the seed layer, is made of a zinc-based three-element oxide composition, namely ZTAO-7.

Examples 28 to 29 were prepared according to one embodiment of the invention, wherein the two contact layers for the IR functional layer, that is, the seed and the barrier layers, are made of a zinc-based three-element oxide composition, namely either ZTAO-7.

Comparative examples C6 and C7 were provided with seed and barrier layers that were based on zinc oxide and aluminium doped zinc oxide, respectively.

The stack for Examples 24 to 29 and for Comparative examples C6 and C7 may be summarized as follows, in support with Table 9.

Glass/TXO (21 or 17 nm)/ seed (5 or 9 nm)/Ag (12 nm)/ barrier (5 or 9 nm)/ZSO5 (22 or 14 nm)/SiN (20 or 18 nm)/TZO (0 or 4 nm).

Examples 24, 26, 28 and Comparative example C6 were provided with no topcoat above the SiN upper layer.

Examples 25, 27, 29 and Comparative example C7 were provided with a topcoat of TZO above the SiN upper layer.

The results are based on the average of the results provided by the combinations 5nm/5nm and 9nm/9nm.

Results for the various tests are provided in Table 9 (average values for multiple repeated trials for each example and Comparative example). Before bake, the presence of the TZO topcoat has a positive impact on the resistance to the climatic chamber (CC). The ZTAO barrier layer has a positive impact on the Cleveland test results (Examples 24 and 25).

**TABLE 9**

| Example | C6 | C7 | 24 | 25 | 26 | 27 | 28 | 29 |
|---|---|---|---|---|---|---|---|---|
| Materials Seed/Barrier | ZnO/ AZO2% - wo. top coat | ZnO/ AZO2% - w. top coat | ZnO/ ZTAO-7 - wo. top coat | ZnO/ ZTAO-7 - w. top coat | ZTAO-7 / AZO2% - wo. top-coat | ZTAO-7 / AZO2% - w. topcoat | ZTAO-7 / ZTAO-7 - wo. top-coat | ZTAO-7 / ZTAO-7 - w. topcoat |
| Thicknesses Seed/Barrier (nm) | 5-9/5-9 | 5-9/5-9 | 5/5 | 5/5 | 5/5 | 5/5 | 5-9/5-9 | 5-9/5-9 |
| Cleveland 3 days | 1.5 | 1.5 | 4.5 | 4.5 | 1.5 | 2.0 | 4.5 | 4.5 |
| CC 3 days | 0.8 | 2.8 | 0.0 | 1.5 | 1.0 | 3.5 | 1.0 | 2.0 |
| SF 2 days | 3.5 | 3.0 | 1.3 | 0.5 | 3.0 | 3.0 | 3.4 | 3.4 |
| DBT 500 cycles | 8.5 | 10.0 | 9.0 | 9.5 | 8.5 | 9.0 | 8.5 | 10.0 |
| AWRT 250 | 8.8 | 9.5 | 4.0 | 2.0 | 9.0 | 9.0 | 4.5 | 3.5 |

**Examples 30 to 32 - Comparative example C8**

Examples 30 to 32 were prepared. Example 30 (not according to the invention) is provided with a barrier layer of ZTAO-7, Example 31 (not according to the invention) is provided with a seed layer of ZTAO-7, Example 32 (according to the invention) is provided with both the seed and barrier layers made of ZTAO-7.

Comparative example C8 was provided with seed and barrier layers that were based on zinc oxide and aluminium doped zinc oxide, respectively.

The stack for Examples 30 to 32 and Comparative example C8 may be summarized as follows, in support with Table 10.

Glass/ZSO5 (16 nm)/ TZO (18 nm)/ seed (4 nm)/Ag (10 nm)/ barrier (4 nm)/ZSO5 (8 nm)/SiN (25 nm)/TZO (4 nm).

Results for the various tests are provided in Table 10 (average values for multiple repeated trials for each example and Comparative example). Results indicate that the glazings of Examples 30 to 32 remain more stable than Comparative example C8 through the Cleveland tests after bake. After bake, Examples 30 and 32 are also providing more resistance through the salt fog test (2 days).

**TABLE 10**

| Example | C8 | 30 | 31 | 32 |
|---|---|---|---|---|
| Materials Seed/Barrier | ZnO / AZO2% | ZnO / ZTAO-7 | ZTAO-7 / AZO2% | ZTAO-7 / ZTAO-7 |
| Thicknesses Seed/Barrier (nm) | 4/4 | 4/4 | 4/4 | 4/4 |
| Before Bake | | | | |
| Cleveland 3 days | 4.0 | 4.5 | 3.5 | 4.5 |
| CC 3 days | 2.5 | 3.0 | 2.8 | 2.8 |
| SF 2 days | 2.2 | 2.9 | 2.0 | 2.0 |
| DBT 500 cycles | 9.9 | 10.0 | 10.0 | 10.0 |
| DBT 500 cycles + bake | 9.6 | 10.0 | 10.0 | 10.0 |
| AWRT 250 | 3.0 | 3.0 | 2.5 | 1.0 |

(continued)

| After Bake | | | | |
|---|---|---|---|---|
| Cleveland 3 days | 2.8 | 4.0 | 3.5 | 4.5 |
| CC 3 days | 2.0 | 2.8 | 0.5 | 1.5 |
| SF 2 days | 2.7 | 4.3 | 2.0 | 4.3 |

**Example 33**

Example 33 was prepared according to one embodiment of the present invention, including two IR functional layers, each having the two contact layers (that is, the seed and barrier layers) made of a zinc-based three-element oxide composition, namely ZTAO-7, providing for:
Glass/ZSO5 (32.9 nm)/ZTAO (9 nm)/Ag (12.9 nm)/ZTAO (5 nm)/ZSO5 (36.8 nm)/ SiN (36.7 nm)/ZSO5 (3.6 nm)/ZTAO (9 nm)/Ag (13.8 nm)/ZTAO (5 nm)/ZSO5 (7.7 nm)/ SiN (21.7 nm)/ TZO (3 nm).
Example 33 was found more chemically and mechanically durable than the comparative stack having seed layers made of ZnO and barrier layers made of AZO 2% for both the IR functional layers.

**Example 34 - Comparative examples C9 to C11**

Example 34 was prepared according to one embodiment of the present invention, with both the seed and barrier layers made of ZTAO-7:
Glass/ZSO5 (24.5 nm)/ZTAO-7 (9 nm)/Ag (18 nm)/ZTAO-7 (5 nm)/ZSO5 (20 nm)/ SiN (20 nm).
Comparative example C1.b is the same as previously proposed
Glass/ZSO5 (28.5 nm)/ZnO (5 nm)/Ag (18 nm)/AZO (5 nm)/ZSO5 (20 nm)/ SiN (20 nm).
Comparative examples C9 to C11 were provided with seed and/or barrier layers based on zinc oxide doped with only gallium (GZO):

- C9: Glass/ZSO5 (28.5 nm)/ZnO (5 nm)/Ag (18 nm)/GZO (5 nm)/ZSO5 (20 nm)/ SiN (20 nm)
- C10: Glass/ZSO5 (28.5 nm)/GZO (5 nm)/Ag (18 nm)/GZO (5 nm)/ZSO5 (20 nm)/ SiN (20 nm)
- C11: Glass/ZSO5 (24.5 nm)/GZO (9 nm)/Ag (18 nm)/GZO (5 nm)/ZSO5 (20 nm)/ SiN (20 nm).

Results for the various tests are provided in Table 11 (average values for multiple repeated trials for each Example and Comparative example). Results indicate that the glazing of Example 34 remains significantly more stable than Comparative example C1.b and C9 to C11 through the Cleveland, climatic chamber and salt fog tests. The DBT and AWRT test results are also significantly in favor of Example 34.

**TABLE 11**

| Example | C1.b | C9 | C10 | C11 | Ex 34 |
|---|---|---|---|---|---|
| Materials Seed/Barrier | ZnO/ AZO2% | ZnO/GZO | GZO/GZO | GZO/GZO | ZTAO-7/ ZTAO-7 |
| Thicknesses Seed/Barrier (nm) | 5/5 | 5/5 | 5/5 | 9/5 | 9/5 |
| Cleveland 10 days | 1.0 | 2 | 2.5 | 3.75 | 4.75 |
| CC 10 days | 1.3 | 2.5 | 3 | 2.75 | 3.5 |
| SF 10 days | 1.0 | 0 | 0.25 | 1.25 | 4.25 |
| DBT 500 cycles | 7.3 | 8.75 | 9.5 | 8.5 | 9 |
| DBT 500 cycles + bake | 4.3 | 9.25 | 9.5 | 7 | 9.25 |
| AWRT 500 cycles | 10.0 | 2 | 5 | 7.5 | 9 |

**Examples 34 and 35 - Comparative example C12**

Example 34 is the same as previously proposed, with both the seed and barrier layers made of ZTAO-7:
Glass/ZSO5 (24.5 nm)/ZTAO (9 nm)/Ag (18 nm)/ZTAO (5 nm)/ZSO5 (20 nm)/ SiN (20 nm)
Example 35 was prepared according to one embodiment of the present invention, with the seed layer made of ZTAO-7, and the barrier layer made of a zinc oxide doped with aluminium and tin (ZSAO-2) :

Glass/ZSO5 (24.5 nm)/ZTAO-7 (9 nm)/Ag (18 nm)/ZSAO-2 (5 nm)/ZSO5 (20 nm)/ SiN (20 nm).

Comparative example C12 was provided with seed and barrier layers based on zinc oxide doped with aluminium and tin (ZSAO-2):

Glass/ZSO5 (24.5 nm)/ZSAO-2 (9 nm)/Ag (18 nm)/ZSAO-2 (5 nm)/ZSO5 (20 nm)/ SiN (20 nm).

Results for the various tests are provided in Table 12 (average values for multiple repeated trials for each Example and Comparative example). Results indicate that the glazing of Example 35, with only one contact layer underneath and in direct contact with the IR functional layer has improved mechanical properties, with regard to the DBT and AWRT tests, over the Comparative example C12, with no contact layer according to the present invention. Example 34 with both seed and barrier layers made of a zinc oxide doped with aluminium and titanium has both chemical and mechanical properties improved, with still better results with regard to the Cleveland, climatic chamber and salt fog tests, over Example 35 and Comparative example C12.

**TABLE 12**

| Example | C12 | Ex 35 | Ex 34 |
|---|---|---|---|
| Materials Seed/Barrier | ZSAO-2/ZSAO-2 | ZTAO-7/ZSAO-2 | ZTAO-7/ ZTAO-7 |
| Thicknesses Seed/Barrier (nm) | 9/5 | 9/5 | 9/5 |
| Cleveland 10 days | 1 | 1.5 | 4.75 |
| CC 10 days | 2.75 | 2.75 | 3.5 |
| SF 10 days | 1.5 | 0.5 | 4.25 |
| DBT 500 cycles | 7.5 | 9.25 | 9 |
| DBT 500 cycles + bake | 8.25 | 9 | 9.25 |
| AWRT 500 cycles | 7.5 | 8.75 | 9 |

**Examples 34 and 36 - Comparative example C13**

Example 34 is the same as previously proposed, with both the seed and barrier layers made of ZTAO-7:

Glass/ZSO5 (24.5 nm)/ZTAO (9 nm)/Ag (18 nm)/ZTAO (5 nm)/ZSO5 (20 nm)/ SiN (20 nm)

Example 36 was prepared according to one embodiment of the present invention, with the seed layer made of ZTAO-7, and the barrier layer made of a zinc oxide doped with aluminium and tin (ZSAO-3) :

Glass/ZSO5 (24.5 nm)/ZTAO-7 (9 nm)/Ag (18 nm)/ZSAO-3 (5 nm)/ZSO5 (20 nm)/ SiN (20 nm).

Comparative example C13 was provided with seed and barrier layers based on zinc oxide doped with aluminium and tin (ZSAO-3):

Glass/ZSO5 (24.5 nm)/ZSAO-3 (9 nm)/Ag (18 nm)/ZSAO-3 (5 nm)/ZSO5 (20 nm)/ SiN (20 nm).

Results for the various tests are provided in Table 13 (average values for multiple repeated trials for each Example and Comparative example). Results indicate that the glazing of Example 36, with only one contact layer underneath and in direct contact with the IR functional layer has improved mechanical properties, with regard to the DBT and AWRT tests, over the Comparative example C13, with no contact layer according to the present invention. Example 34 with both seed and barrier layers made of a zinc oxide doped with aluminium and titanium has both chemical and mechanical properties improved, with still better results with regard to the Cleveland, climatic chamber and salt fog tests, over Example 36 and Comparative example C13.

**TABLE 13**

| Example | C13 | Ex 36 | Ex 34 |
|---|---|---|---|
| Materials Seed/Barrier | ZSAO-3/ZSAO-3 | ZTAO-7/ZSAO-3 | ZTAO-7/ ZTAO-7 |
| Thicknesses Seed/Barrier (nm) | 9/5 | 9/5 | 9/5 |
| Cleveland 10 days | 2.5 | 3 | 4.75 |
| CC 10 days | 3.25 | 2.75 | 3.5 |
| SF 10 days | 2 | 1 | 4.25 |
| DBT 500 cycles | 8 | 9.25 | 9 |

(continued)

| Example | C13 | Ex 36 | Ex 34 |
|---|---|---|---|
| DBT 500 cycles + bake | 8.25 | 8.75 | 9.25 |
| AWRT 500 cycles | 8.5 | 9.25 | 9 |

### Examples 34, 37 and 38

Example 34 is the same as previously proposed, with both the seed and barrier layers made of ZTAO-7:
Glass/ZSO5 (24.5 nm)/ZTAO (9 nm)/Ag (18 nm)/ZTAO (5 nm)/ZSO5 (20 nm)/ SiN (20 nm)

Example 37 was prepared according to one embodiment of the present invention, with the barrier layer made of ZTAO-7, and the seed layer made of a zinc oxide doped with aluminium and tin (ZSAO-4) :
Glass/ZSO5 (24.5 nm)/ZSAO-4 (9 nm)/Ag (18 nm)/ZTAO-7 (5 nm)/ZSO5 (20 nm)/ SiN (20 nm).

Example 38 was prepared according to one embodiment of the present invention, with the seed layer made of ZTAO-7, and the barrier layer made of a zinc oxide doped with aluminium and tin (ZSAO-4) :
Glass/ZSO5 (24.5 nm)/ZTAO-7 (9 nm)/Ag (18 nm)/ZSAO-4 (5 nm)/ZSO5 (20 nm)/ SiN (20 nm).

Results for the various tests are provided in Table 14 (average values for multiple repeated trials for each Example). Results indicate that the glazing of Example 37, with only one contact layer above and in direct contact with the IR functional layer has improved chemical properties, with regard to the Cleveland and salt fog tests. Example 38, with only one contact layer underneath and in direct contact with the IR functional layer has improved mechanical properties, with regard to the DBT and AWRT tests. Example 34 with both seed and barrier layers made of a zinc oxide doped with aluminium and titanium has both positive chemical and mechanical test results, indicating still better results in both chemical and mechanical durability.

### TABLE 14

| Example | Ex 37 | Ex 38 | Ex 34 |
|---|---|---|---|
| Materials Seed/Barrier | ZSAO-4/ZTAO-7 | ZTAO-7/ZSAO-4 | ZTAO-7/ZTAO-7 |
| Thicknesses Seed/Barrier (nm) | 9/5 | 9/5 | 9/5 |
| Cleveland 10 days | 4.75 | 2 | 4.75 |
| CC 10 days | 1 | 3 | 3.5 |
| SF 10 days | 2.25 | 0.5 | 4.25 |
| DBT 500 cycles | 7.5 | 9.5 | 9 |
| DBT 500 cycles + bake | 3.5 | 8.5 | 9.25 |
| AWRT 500 cycles | 8.75 | 9 | 9 |

### Examples 34 and 39 - Comparative example C14

Example 34 is the same as previously proposed, with both the seed and barrier layers made of ZTAO-7:
Glass/ZSO5 (24.5 nm)/ZTAO (9 nm)/Ag (18 nm)/ZTAO (5 nm)/ZSO5 (20 nm)/ SiN (20 nm)

Example 39 was prepared according to one embodiment of the present invention, with the barrier layer made of ZTAO-7, and the seed layer made of a zinc oxide doped with aluminium and tin (ZSAO-1) :
Glass/ZSO5 (24.5 nm)/ZSAO-1 (9 nm)/Ag (18 nm)/ZTAO-7 (5 nm)/ZSO5 (20 nm)/ SiN (20 nm).

Comparative example C14 was provided with seed and barrier layers based on zinc oxide doped with aluminium and tin (ZSAO-1):
Glass/ZSO5 (24.5 nm)/ZSAO-1 (9 nm)/Ag (18 nm)/ZSAO-1 (5 nm)/ZSO5 (20 nm)/ SiN (20 nm).

Results for the various tests are provided in Table 15 (average values for multiple repeated trials for each Example and Comparative example). Results indicate that the glazing of Example 39, with only one contact layer above and in direct contact with the IR functional layer has improved chemical properties, with regard to the Cleveland test, over the Comparative example C14, with no contact layer according to the present invention. Example 34 with both seed and barrier layers made of a zinc oxide doped with aluminium and titanium has both chemical and mechanical properties improved, with still better results with regard to the DBT and AWRT tests, over Example 39 and Comparative example C14.

TABLE 15

| Example | C14 | Ex 39 | Ex 34 |
|---|---|---|---|
| Materials Seed/Barrier | ZSAO-1/ZSAO-1 | ZSAO-1/ ZTAO-7 | ZTAO-7/ ZTAO-7 |
| Thicknesses Seed/Barrier (nm) | 9/5 | 9/5 | 9/5 |
| Cleveland 10 days | 0 | 5 | 4.75 |
| CC 10 days | 2.75 | 1.75 | 3.5 |
| SF 10 days | 1 | 1 | 4.25 |
| DBT 500 cycles | 8.75 | 8 | 9 |
| DBT 500 cycles + bake | 8 | 5.5 | 9.25 |
| AWRT 500 cycles | 9.5 | 9.5 | 9 |

**Examples 34 and 40** - **Comparative example C15**

Example 34 is the same as previously proposed, with both the seed and barrier layers made of ZTAO-7: Glass/ZSO5 (24.5 nm)/ZTAO (9 nm)/Ag (18 nm)/ZTAO (5 nm)/ZSO5 (20 nm)/ SiN (20 nm)

Example 40 was prepared according to one embodiment of the present invention, with the barrier layer made of ZTAO-7, and the seed layer made of a zinc oxide doped with aluminium and gallium (GAZO-2) : Glass/ZSO5 (24.5 nm)/ GAZO-2 (9 nm)/Ag (18 nm)/ZTAO-7 (5 nm)/ZSO5 (20 nm)/ SiN (20 nm).

Comparative example C15 was provided with seed and barrier layers based on zinc oxide doped with aluminium and gallium (GAZO-2): Glass/ZSO5 (24.5 nm)/ GAZO-2 (9 nm)/Ag (18 nm)/ GAZO-2 (5 nm)/ZSO5 (20 nm)/ SiN (20 nm).

Results for the various tests are provided in Table 16 (average values for multiple repeated trials for each Example and Comparative example). Results indicate that the glazing of Example 40, with only one contact layer above and in direct contact with the IR functional layer has improved chemical properties, with regard to the Cleveland test, over the Comparative example C15, with no contact layer according to the present invention. Example 34 with both seed and barrier layers made of a zinc oxide doped with aluminium and titanium has both chemical and mechanical properties improved, with still better results with regard to the DBT and AWRT tests, over Example 40 and Comparative example C15.

TABLE 16

| Example | C15 | Ex 40 | Ex 34 |
|---|---|---|---|
| Materials Seed/Barrier | GAZO-2/GAZO-2 | GAZO-2/ZTAO-7 | ZTAO-7/ ZTAO-7 |
| Thicknesses Seed/Barrier (nm) | 9/5 | 9/5 | 9/5 |
| Cleveland 10 days | 2 | 4 | 4.75 |
| CC 10 days | 2 | 1.5 | 3.5 |
| SF 10 days | 1 | 1.5 | 4.25 |
| DBT 500 cycles | 8.75 | 8.5 | 9 |
| DBT 500 cycles + bake | - | 7 | 9.25 |
| AWRT 500 cycles | 9.75 | 8.75 | 9 |

**Examples 34 and 41** - **Comparative example C16**

Example 34 is the same as previously proposed, with both the seed and barrier layers made of ZTAO-7: Glass/ZSO5 (24.5 nm)/ZTAO (9 nm)/Ag (18 nm)/ZTAO (5 nm)/ZSO5 (20 nm)/ SiN (20 nm)

Example 41 was prepared according to one embodiment of the present invention, with the seed layer made of ZTAO-7, and the barrier layer made of a zinc oxide doped with aluminium and gallium (GAZO-3) : Glass/ZSO5 (28.5 nm)/ ZTAO-7 (5 nm)/Ag (18 nm)/ GAZO-3 (5 nm)/ZSO5 (20 nm)/ SiN (20 nm).

Comparative example C16 was provided with seed and barrier layers based on zinc oxide doped with aluminium and gallium (GAZO-3):

Glass/ZSO5 (24.5 nm)/ GAZO-3 (9 nm)/Ag (18 nm)/ GAZO-3 (5 nm)/ZSO5 (20 nm)/ SiN (20 nm).

Results for the various tests are provided in Table 17 (average values for multiple repeated trials for each Example and Comparative example). Results indicate that the glazing of Example 41, with only one contact layer above and in direct contact with the IR functional layer has improved mechanical properties, with regard to the DBT and AWRT tests, over the Comparative example C16, with no contact layer according to the present invention. Example 34 with both seed and barrier layers made of a zinc oxide doped with aluminium and titanium has both chemical and mechanical properties improved, with still better results with regard to the Cleveland, climatic chamber and salt fog tests, over Example 41 and Comparative example C16.

**TABLE 17**

| Example | C16 | Ex 41 | Ex 34 |
|---|---|---|---|
| Materials Seed/Barrier | GAZO-3/GAZO-3 | ZTAO-7/GAZO-3 | ZTAO-7/ ZTAO-7 |
| Thicknesses Seed/Barrier (nm) | 9/5 | 5/5 | 9/5 |
| Cleveland 10 days | 1.25 | 2.5 | 4.75 |
| CC 10 days | 2.25 | 1.5 | 3.5 |
| SF 10 days | 1.5 | 1 | 4.25 |
| DBT 500 cycles | 8.75 | 9.5 | 9 |
| DBT 500 cycles + bake | 7 | 9 | 9.25 |
| AWRT 500 cycles | 9 | 9.5 | 9 |

## Example 34 - Comparative examples C17 and C18

Example 34 is the same as previously proposed, with both the seed and barrier layers made of ZTAO-7:
Glass/ZSO5 (24.5 nm)/ZTAO (9 nm)/Ag (18 nm)/ZTAO (5 nm)/ZSO5 (20 nm)/ SiN (20 nm)

Comparative examples C17 and C18 were provided with seed and barrier layers based on zinc oxide doped with aluminium and gallium (GAZO-4 and GAZO-5):
Glass/ZSO5 (24.5 nm)/ GAZO (9 nm)/Ag (18 nm)/ GAZO (5 nm)/ZSO5 (20 nm)/ SiN (20 nm).

Results for the various tests are provided in Table 18 (average values for multiple repeated trials for each Example and Comparative example). Example 34 with both seed and barrier layers made of a zinc oxide doped with aluminium and titanium has both chemical and mechanical properties improved, over Comparative examples C17 and C18.

**TABLE 18**

| Example | C17 | C18 | Ex 34 |
|---|---|---|---|
| Materials Seed/Barrier | GAZO-4/GAZO-4 | GAZO-5/GAZO-5 | ZTAO-7/ ZTAO-7 |
| Thicknesses Seed/Barrier (nm) | 9/5 | 9/5 | 9/5 |
| Cleveland 10 days | 2 | 1.75 | 4.75 |
| CC 10 days | 1.25 | 2 | 3.5 |
| SF 10 days | 0.5 | 0.5 | 4.25 |
| DBT 500 cycles | 9.5 | 9.25 | 9 |
| DBT 500 cycles + bake | 8.5 | 7.5 | 9.25 |
| AWRT 500 cycles | 6.5 | 5.5 | 9 |

## Claims

1. A coated substrate comprising a transparent substrate provided with a stack of thin layers comprising an alternating arrangement of n infrared radiation reflecting (IR) functional layers and n+1 dielectric coatings, with $n \geq 1$, such that each functional layer is surrounded by dielectric coatings, **characterized in that**

the stack further comprises two contact layers for at least one of the n infrared radiation reflecting functional layers, comprising an oxide of zinc combined with at least 2 distinct elements, X and Y, selected from the group comprising titanium, aluminium or selected from the group comprising indium, gallium or selected from the group comprising aluminium, magnesium, wherein the two contact layers are above and below and in direct contact with the at least one of the infrared radiation reflecting (IR) functional layers

and wherein the stack comprises, in order starting from the substrate

(1) A first dielectric layer,
(2) A first contact layer, below and in contact with the first IR functional layer,
(3) An first IR functional layer,
(4) A second contact layer, above and in contact with the first IR functional layer,
(5) A second dielectric layer,
(6) A topcoat layer.

2. The coated substrate of claim 1, wherein the zinc-based three-element oxide composition comprises 60 to 99 atomic % of zinc, and 1 to 40 atomic % combined of the at least two distinct elements, X and Y.

3. The coated substrate of any of the preceding claims, wherein each X or Y element may be present in the zinc-based three-element oxide composition in an amount of from 0.5 to 39 atomic %, based on the total of the zinc-based three-element oxide composition, the second (or more) element(s) making up for the total of the 40 atomic % of the at least two distinct elements, X and Y, taking into account the presence of optional dopant(s) and impurities.

4. The coated substrate of any of the preceding claims wherein each X or Y element may be present in a ratio X/Y of from 0.05 to 20.

5. The coated substrate of any of the preceding claims, wherein the stack comprises two contact layers comprising an oxide of zinc combined with at least 2 distinct elements, X and Y, selected from the group comprising titanium, aluminium or selected from the group comprising indium, gallium or selected from the group comprising aluminium, magnesium, for each one of the n IR functional layer present.

6. The coated substrate of any of the preceding claims, wherein each contact layer has a thickness of from 0.1 to 30 nm.

7. The coated substrate of any of the preceding claims, wherein the stack further comprises a topcoat layer.

8. The coated substrate of claim 1, with n > 1, wherein the stack comprises two contact layers, below and above, and in contact with each one of the IR functional layers present comprising an oxide of zinc combined with at least 2 distinct elements, X and Y, selected from the group comprising titanium, aluminium or selected from the group comprising indium, gallium or selected from the group comprising aluminium, magnesium.

9. The coated substrate of claim 8, wherein the stack comprises, in sequence:

(1) A first dielectric layer,
(2) A first contact layer, below and in direct contact with the first IR functional layer,
(3) A first IR functional layer,
(4) A second contact layer, above and in direct contact with the first IR functional layer,
(5) A second dielectric layer,
(6) An optional absorbing layer,
(7) A third dielectric layer,
(8) A third contact layer, below and in direct contact with the second IR functional layer,
(9) A second IR functional layer,
(10) A fourth contact layer, above and in direct contact with the second IR functional layer,
(11) A fourth dielectric layer,
(12) A topcoat layer,

wherein each of the contact layer comprises an oxide of zinc combined with at least 2 elements, X and Y, selected from the group comprising titanium, aluminium or selected from the group comprising indium, gallium or selected from the group comprising aluminium, magnesium.

10. The coated substrate of any of claims of any of claims 1 to 9, wherein the contact layers below and above, and in contact with one chosen IR functional layer have the same composition.

11. The coated substrate of any of claims 1 to 10, wherein each of the contact layer has a thickness of from 0.1 to 30 nm.

12. The coated substrate of any of claims of any of claims 1 to 11, wherein the contact layers below and above, and in contact with one chosen IR functional layer have the same thickness.

13. A method to provide for any of the coated substrates of claims 1 to 12 using at least one of vacuum deposition methods, including magnetron sputtering , LPCVD (low pressure chemical vapor deposition) or plasma enhanced chemical vapor deposition PECVD.

14. A heat treated coated substrate comprising a transparent substrate provided with a stack of thin layers comprising an alternating arrangement of n infrared radiation reflecting (IR) functional layers and n+1 dielectric coatings, with $n \geq 1$, such that each functional layer is surrounded by dielectric coatings, **characterized in that** the stack further comprises two contact layers for at least one of the n infrared radiation reflecting functional layers, comprising an oxide of zinc combined with at least 2 distinct elements X and Y, selected from the group comprising titanium, aluminium or selected from the group comprising indium, gallium or selected from the group comprising aluminium, magnesium, wherein the two contact layers are above and below and in direct contact with the at least one of the n infrared radiation reflecting functional layers.

15. A multiple glazing unit comprising at least one coated substrate comprising a transparent substrate provided with a stack of thin layers comprising an alternating arrangement of n infrared radiation reflecting (IR) functional layers and n+1 dielectric coatings, with $n \geq 1$, such that each functional layer is surrounded by dielectric coatings, **characterized in that** the stack further comprises two contact layers for at least one of the n infrared radiation reflecting functional layers, comprising an oxide of zinc combined with at least 2 distinct elements X and Y, selected from the group comprising titanium, aluminium or selected from the group comprising indium, gallium or selected from the group comprising aluminium, magnesium, wherein the two contact layers are above and below and in direct contact with the at least one of the n infrared radiation reflecting functional layers.


**Patentansprüche**

1. Beschichtetes Substrat, umfassend ein transparentes Substrat, das mit einem Stapel von dünnen Schichten versehen ist, der eine alternierende Anordnung von n Infrarotstrahlung-reflektierenden (IR) Funktionsschichten und n + 1 dielektrischen Beschichtungen umfasst, wobei $n \geq 1$, so dass jede Funktionsschicht von dielektrischen Beschichtungen umgeben ist, **dadurch gekennzeichnet, dass**

der Stapel ferner zwei Kontaktschichten für wenigstens eine der n Infrarotstrahlung-reflektierenden Funktionsschichten umfasst, die ein Oxid von Zink kombiniert mit wenigstens 2 verschiedenen Elementen, X und Y, ausgewählt aus der Gruppe umfassend Titan, Aluminium oder ausgewählt aus der Gruppe umfassend Indium, Gallium oder ausgewählt aus der Gruppe umfassend Aluminium, Magnesium umfassen, wobei die beiden Kontaktschichten über und unter und in direktem Kontakt mit der wenigstens einen der Infrarotstrahlung-reflektierenden (IR) Funktionsschichten angeordnet sind, und wobei der Stapel, ausgehend von dem Substrat, der Reihe nach umfasst:

(1) eine erste dielektrische Schicht,
(2) eine erste Kontaktschicht unter und in Kontakt mit der ersten IR-Funktionsschicht,
(3) eine erste IR-Funktionsschicht,
(4) eine zweite Kontaktschicht über und in Kontakt mit der ersten IR-Funktionsschicht,
(5) eine zweite dielektrische Schicht,
(6) eine Deckschicht.

2. Beschichtetes Substrat gemäß Anspruch 1, wobei die Dreielementoxid-Zusammensetzung auf Zinkbasis 60 bis 99 Atom-% Zink und kombinierte 1 bis 40 Atom-% der wenigstens zwei verschiedenen Elemente X und Y umfasst.

3. Beschichtetes Substrat gemäß einem der vorstehenden Ansprüche, wobei jedes X- oder Y-Element in der Dreielementoxid-Zusammensetzung auf Zinkbasis in einer Menge von 0,5 bis 39 Atom-%, bezogen auf die Gesamtmenge

EP 3 728 157 B1

der Dreielementoxid-Zusammensetzung auf Zinkbasis, vorhanden sein kann, während das zweite (oder die mehreren) Element (e) den Rest der 40 Atom-% der wenigstens zwei verschiedenen Elemente X und Y bildet (bilden), wobei das Vorhandensein optionaler Dotierstoff(e) und Verunreinigungen berücksichtigt wird.

4. Beschichtetes Substrat gemäß einem der vorstehenden Ansprüche, wobei jedes X- oder Y-Element in einem X/Y-Verhältnis von 0,05 bis 20 vorhanden sein kann.

5. Beschichtetes Substrat gemäß einem der vorstehenden Ansprüche, wobei der Stapel zwei Kontaktschichten umfasst, die ein Oxid von Zink kombiniert mit wenigstens 2 verschiedenen Elementen, X und Y, ausgewählt aus der Gruppe umfassend Titan, Aluminium oder ausgewählt aus der Gruppe umfassend Indium, Gallium oder ausgewählt aus der Gruppe umfassend Aluminium, Magnesium für jede der n vorhandenen IR-Funktionsschichten umfassen.

6. Beschichtetes Substrat gemäß einem der vorstehenden Ansprüche, wobei jede Kontaktschicht eine Dicke von 0,1 bis 30 nm aufweist.

7. Beschichtetes Substrat gemäß einem der vorstehenden Ansprüche, wobei der Stapel ferner eine Deckschicht umfasst.

8. Beschichtetes Substrat gemäß Anspruch 1 mit n > 1, wobei der Stapel zwei Kontaktschichten über und unter und in Kontakt mit jeder der vorhandenen IR-Funktionsschichten umfasst, die ein Oxid von Zink kombiniert mit wenigstens 2 verschiedenen Elementen, X und Y, ausgewählt aus der Gruppe umfassend Titan, Aluminium oder ausgewählt aus der Gruppe umfassend Indium, Gallium oder ausgewählt aus der Gruppe umfassend Aluminium, Magnesium umfassen.

9. Beschichtetes Substrat gemäß Anspruch 8, wobei der Stapel der Reihenfolge nach umfasst:

(1) eine erste dielektrische Schicht,
(2) eine erste Kontaktschicht unter und in direktem Kontakt mit der ersten IR-Funktionsschicht,
(3) eine erste IR-Funktionsschicht,
(4) eine zweite Kontaktschicht über und in direktem Kontakt mit der ersten IR-Funktionsschicht,
(5) eine zweite dielektrische Schicht,
(6) eine optionale Absorptionsschicht,
(7) eine dritte dielektrische Schicht,
(8) eine dritte Kontaktschicht unter und in direktem Kontakt mit der zweiten IR-Funktionsschicht,
(9) eine zweite IR-Funktionsschicht,
(10) eine vierte Kontaktschicht über und in direktem Kontakt mit der zweiten IR-Funktionsschicht,
(11) eine vierte dielektrische Schicht,
(12) eine Deckschicht, wobei jede der Kontaktschichten ein Oxid von Zink kombiniert mit wenigstens 2 Elementen, X und Y, ausgewählt aus der Gruppe umfassend Titan, Aluminium oder ausgewählt aus der Gruppe umfassend Indium, Gallium oder ausgewählt aus der Gruppe umfassend Aluminium, Magnesium umfasst.

10. Beschichtetes Substrat gemäß einem der Ansprüche 1 bis 9, wobei die Kontaktschichten über und unter und in Kontakt mit einer ausgewählten IR-Funktionsschicht die gleiche Zusammensetzung aufweisen.

11. Beschichtetes Substrat gemäß einem der Ansprüche 1 bis 10, wobei jede der Kontaktschichten eine Dicke von 0,1 bis 30 nm aufweist.

12. Beschichtetes Substrat gemäß einem der Ansprüche 1 bis 11, wobei die Kontaktschichten über und unter und in Kontakt mit einer ausgewählten IR-Funktionsschicht die gleiche Dicke aufweisen.

13. Verfahren zur Bereitstellung eines der beschichteten Substrate gemäß Ansprüchen 1 bis 12 unter Verwendung von wenigstens einem von Vakuumabscheidungsverfahren, einschließlich Magnetron-Sputtern, LPCVD (chemische Dampfabscheidung bei tiefem Druck) und plasmaunterstützter chemischer Dampfabscheidung, PECVD.

14. Wärmebehandeltes beschichtetes Substrat, das ein transparentes Substrat umfasst, das mit einem Stapel von dünnen Schichten versehen ist, der eine alternierende Anordnung von n Infrarotstrahlung-reflektierenden (IR) Funktionsschichten und n + 1 dielektrischen Beschichtungen umfasst, wobei n ≥ 1, so dass jede Funktionsschicht von dielektrischen Beschichtungen umgeben ist, **dadurch gekennzeichnet, dass** der Stapel ferner zwei Kontaktschichten für wenigstens eine der n Infrarotstrahlung-reflektierenden Funktionsschichten umfasst, die ein Oxid von Zink kombiniert mit wenigstens 2 verschiedenen Elementen, X und Y, ausgewählt aus der Gruppe umfassend Titan, Aluminium oder ausgewählt aus der Gruppe umfassend Indium, Gallium oder ausgewählt aus der Gruppe umfassend Aluminium, Magnesium umfassen, wobei die beiden Kontaktschichten über und unter und in direktem Kontakt mit der wenigstens einen der n Infrarotstrahlung-reflektierenden Funktionsschichten angeordnet sind.

15. Verbundglaseinheit, umfassend wenigstens ein beschichtetes Substrat, das ein transparentes Substrat umfasst, das mit einem Stapel von dünnen Schichten versehen ist, der eine alternierende Anordnung von n Infrarotstrahlung-reflektierenden (IR) Funktionsschichten und n + 1 dielektrischen Beschichtungen umfasst, wobei n ≥ 1, so dass jede Funktionsschicht von dielektrischen Beschichtungen umgeben ist, **dadurch gekennzeichnet, dass** der Stapel ferner zwei Kontaktschichten für wenigstens eine der n Infrarotstrahlung-reflektierenden Funktionsschichten umfasst, die ein Oxid von Zink kombiniert mit wenigstens 2 verschiedenen Elementen, X und Y, ausgewählt aus der Gruppe umfassend Titan, Aluminium oder ausgewählt aus der Gruppe umfassend Indium, Gallium oder ausgewählt aus der Gruppe umfassend Aluminium, Magnesium umfassen, wobei die beiden Kontaktschichten über und unter und in direktem Kontakt mit der wenigstens einen der n Infrarotstrahlung-reflektierenden Funktionsschichten angeordnet sind.

## Revendications

1. Substrat revêtu comprenant un substrat transparent pourvu d'un empilement de couches minces comprenant un agencement alterné de n couches fonctionnelles réfléchissant le rayonnement infrarouge (IR) et de n+1 revêtements diélectriques, avec n ≥ 1, de telle sorte que chaque couche fonctionnelle est entourée de revêtements diélectriques, **caractérisé en ce que**

   l'empilement comprend en outre deux couches de contact pour au moins l'une des n couches fonctionnelles réfléchissant le rayonnement infrarouge, comprenant un oxyde de zinc combiné avec au moins 2 éléments distincts, X et Y, choisis dans le groupe comprenant le titane, l'aluminium ou choisis dans le groupe comprenant l'indium, le gallium ou choisis dans le groupe comprenant l'aluminium, le magnésium, les deux couches de contact étant au-dessus et au-dessous et en contact direct avec l'au moins une des couches fonctionnelles réfléchissant le rayonnement infrarouge (IR),
   et l'empilement comprenant, dans l'ordre en partant du substrat :

      (1) une première couche diélectrique,
      (2) une première couche de contact, au-dessous de et en contact avec la première couche fonctionnelle IR,
      (3) une première couche fonctionnelle IR,
      (4) une deuxième couche de contact, au-dessus de et en contact avec la première couche fonctionnelle IR,
      (5) une deuxième couche diélectrique,
      (6) une couche de finition.

2. Substrat revêtu selon la revendication 1, la composition d'oxyde à trois éléments à base de zinc comprenant 60 à 99 % atomique de zinc, et 1 à 40 % atomique combinés des au moins deux éléments distincts, X et Y.

3. Substrat revêtu selon l'une quelconque des revendications précédentes, chaque élément X ou Y pouvant être présent dans la composition d'oxyde à trois éléments à base de zinc en une quantité de 0,5 à 39 % atomique, sur la base du total de la composition d'oxyde à trois éléments à base de zinc, le deuxième (ou plus) élément(s) constituant le total des 40 % atomique des au moins deux éléments distincts, X et Y, en tenant compte de la présence de dopant(s) et d'impuretés éventuels.

4. Substrat revêtu selon l'une quelconque des revendications précédentes, chaque élément X ou Y pouvant être présent dans un rapport X/Y de 0,05 à 20.

5. Substrat revêtu selon l'une quelconque des revendications précédentes, l'empilement comprenant deux couches de contact comprenant un oxyde de zinc combiné avec au moins 2 éléments distincts, X et Y, choisis dans le groupe comprenant le titane, l'aluminium ou choisis dans le groupe comprenant l'indium, le gallium ou choisis dans le groupe comprenant l'aluminium, le magnésium, pour chacune des n couches fonctionnelles IR présentes.

6. Substrat revêtu selon l'une quelconque des revendications précédentes, chaque couche de contact ayant une épaisseur de 0,1 à 30 nm.

7.  Substrat revêtu selon l'une quelconque des revendications précédentes, l'empilement comprenant en outre une couche de finition.

8.  Substrat revêtu selon la revendication 1, avec n > 1, l'empilement comprenant deux couches de contact, au-dessous et au-dessus, et en contact avec chacune des couches fonctionnelles IR présentes comprenant un oxyde de zinc combiné avec au moins 2 éléments distincts, X et Y, choisis dans le groupe comprenant le titane, l'aluminium ou choisis dans le groupe comprenant l'indium, le gallium ou choisis dans le groupe comprenant l'aluminium, le magnésium.

9.  Substrat revêtu selon la revendication 8, l'empilement comprenant, en séquence :

    (1) une première couche diélectrique,
    (2) une première couche de contact, au-dessous de et en contact direct avec la première couche fonctionnelle IR,
    (3) une première couche fonctionnelle IR,
    (4) une deuxième couche de contact, au-dessus de et en contact direct avec la première couche fonctionnelle IR.
    (5) une deuxième couche diélectrique,
    (6) une couche absorbante éventuelle,
    (7) une troisième couche diélectrique,
    (8) une troisième couche de contact, au-dessous de et en contact direct avec la deuxième couche fonctionnelle IR,
    (9) une deuxième couche fonctionnelle IR,
    (10) une quatrième couche de contact, au-dessus de et en contact direct avec la deuxième couche fonctionnelle IR,
    (11) une quatrième couche diélectrique,
    (12) une couche de finition, chacune des couches de contact comprenant un oxyde de zinc combiné avec au moins 2 éléments, X et Y, choisis dans le groupe comprenant le titane, l'aluminium ou choisis dans le groupe comprenant l'indium, le gallium ou choisis dans le groupe comprenant l'aluminium, le magnésium.

10. Substrat revêtu selon l'une quelconque des revendications 1 à 9, les couches de contact au-dessous et au-dessus, et en contact avec une couche fonctionnelle IR choisie, ayant la même composition.

11. Substrat revêtu selon l'une quelconque des revendications 1 à 10, chacune des couches de contact ayant une épaisseur comprise entre 0,1 et 30 nm.

12. Substrat revêtu selon l'une quelconque des revendications 1 à 11, les couches de contact au-dessous et au-dessus, et en contact avec une couche fonctionnelle IR choisie, ayant la même épaisseur.

13. Procédé pour fournir l'un quelconque des substrats revêtus selon les revendications 1 à 12, utilisant au moins l'un des procédés de dépôt sous vide, comprenant la pulvérisation magnétron, le dépôt chimique en phase vapeur à basse pression, LPCVD ou le dépôt chimique en phase vapeur amélioré par plasma, PECVD.

14. Substrat revêtu traité thermiquement comprenant un substrat transparent pourvu d'un empilement de couches minces comprenant un agencement alterné de n couches fonctionnelles réfléchissant le rayonnement infrarouge (IR) et de n+1 revêtements diélectriques, avec n ≥ 1, de telle sorte que chaque couche fonctionnelle est entourée de revêtements diélectriques, **caractérisé en ce que** l'empilement comprend en outre deux couches de contact pour au moins une des n couches fonctionnelles réfléchissant le rayonnement infrarouge, comprenant un oxyde de zinc combiné avec au moins 2 éléments distincts X et Y, choisis dans le groupe comprenant le titane, l'aluminium ou choisis dans le groupe comprenant l'indium, le gallium ou choisis dans le groupe comprenant l'aluminium, le magnésium, les deux couches de contact étant au-dessus de et au-dessous de et en contact direct avec l'au moins une des n couches fonctionnelles réfléchissant le rayonnement infrarouge.

15. Unité de vitrage multiple comprenant au moins un substrat revêtu comprenant un substrat transparent pourvu d'un empilement de couches minces comprenant un agencement alterné de n couches fonctionnelles réfléchissant le rayonnement infrarouge (IR) et de n+1 revêtements diélectriques, avec n ≥ 1, de telle sorte que chaque couche fonctionnelle est entourée de revêtements diélectriques, **caractérisée en ce que** l'empilement comprend en outre deux couches de contact pour au moins une des n couches fonctionnelles réfléchissant le rayonnement infrarouge, comprenant un oxyde de zinc combiné avec au moins 2 éléments distincts X et Y, choisis dans le groupe comprenant le titane, l'aluminium ou choisis dans le groupe comprenant l'indium, le gallium ou choisis dans le groupe comprenant l'aluminium, le magnésium, les deux couches de contact étant au-dessus de et au-dessous de et en contact direct avec l'au moins une des n couches fonctionnelles réfléchissant le rayonnement infrarouge.

a: 2.5

b:3.5

c: 4.5

Figure 1

a: 0.5

b: 2.5

c: 3.5

d: 4.5

**Figure 2**

a: 1.0

b:3.0

c: 4.5

**Figure 3**

a: 3.0

b:7.0

c: 8.0

d: 9.0

**Figure 4**

a: 4.0

b:7.0

c: 9.0

**Figure 5**

**EP 3 728 157 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003033427 A1
- US 8815420 B2
- WO 2005000578 A1
- WO 2004043871 A1
- US 20120070672 A1
- US 20090047509 A1
- US 20150321950 A1
- US 6159621 A
- US 2009047509 A1